(19) Europäisches Patentamt / European Patent Office / Office européen des brevets

(11) **EP 4 601 207 A1**

(12) **DEMANDE DE BREVET EUROPEEN**

(43) Date de publication:
**13.08.2025 Bulletin 2025/33**

(21) Numéro de dépôt: **25154556.2**

(22) Date de dépôt: **28.01.2025**

(51) Classification Internationale des Brevets (IPC):
**H04B 7/04** *(2017.01)* **H01Q 15/14** *(2006.01)*
**H04B 7/145** *(2006.01)*

(52) Classification Coopérative des Brevets (CPC):
**H04B 7/04013; H01Q 15/148; H04B 7/145**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **08.02.2024 FR 2401238**

(71) Demandeur: **Orange**
**92130 Issy-les-Moulineaux (FR)**

(72) Inventeurs:
• **HUSSEIN, Youssef**
**92326 CHATILLON CEDEX (FR)**
• **CLESSIENNE, Thierry**
**92326 CHATILLON CEDEX (FR)**

(74) Mandataire: **Cabinet Beau de Loménie**
**103, rue de Grenelle**
**75340 Paris Cedex 07 (FR)**

(54) **PROCÉDÉ ET DISPOSITIF DE CONTRÔLE D'UN ENSEMBLE DE SURFACES INTELLIGENTES RECONFIGURABLES**

(57) L'invention concerne un procédé de contrôle d'un ensemble E de surfaces intelligentes reconfigurables (20_1, 20_2, 20_3, 20_4), ledit procédé comportant des étapes de :
- sélection (E10), parmi l'ensemble E, d'au moins une surface comme « surface intermédiaire » et d'au moins une surface comme « surface principale », la sélection étant effectuée de sorte à optimiser un critère déterminé de performance de communication pour des antennes situées dans la zone géographique desservie par chaque surface principale,
- détermination (E20) de déphasages d'éléments de réflexion desdites au moins une surface intermédiaire et au moins une surface principale sélectionnées,
- contrôle (E30) des éléments de réflexion desdites au moins une surface intermédiaire et au moins une surface principale sélectionnées au moyen des déphasages déterminés.

[Fig. 2]

EP 4 601 207 A1

**Description**

Technique antérieure

La présente invention appartient au domaine des systèmes de communication sans fil. Elle concerne plus particulièrement un procédé de contrôle d'un ensemble de surfaces intelligentes reconfigurables associées à une cellule d'un réseau de communication servie par une station de base, ainsi qu'un dispositif de contrôle configuré pour mettre en oeuvre un tel procédé de contrôle.

Comme cela est connu, une surface réfléchissante reconfigurable, ci-après désignée par « RIS » (acronyme de l'expression anglo-saxonne « Reconfigurable Intelligent Surface ») à des fins de concision, correspond à une surface comportant une pluralité d'éléments dont les propriétés de réflexion respectives peuvent être modifiées. Pour davantage de détails concernant le fonctionnement d'une RIS, il est par exemple possible de consulter le document suivant : "Smart Radio Environments Empowered by Reconfigurable Intelligent Surfaces: How it Works, State of Research, and Road Ahead", M. D. Renzo, A. Zappone, M. Debbah, M. Alouini, C. Yuen, J. D. Rosny, and S. Tretyakov, IEEE Journal on Selected 5 Areas in Communications, pages 2450-2524, 2020.

En pratique, une telle RIS est prévue pour réfléchir des signaux radioélectriques incidents de manière passive, c'est-à-dire sans amplification desdits signaux radioélectriques incidents par des amplificateurs (ni par des amplificateurs faible bruit ni par des amplificateurs de puissance). En modifiant les propriétés de réflexion de chaque élément de la RIS, par exemple en modifiant individuellement le déphasage introduit par chacun de ces éléments de réflexion, il est possible d'influencer la façon dont les signaux radioélectriques incidents sont réfléchis par la RIS et, in fine, d'influencer le canal de propagation emprunté par ces signaux radioélectriques.

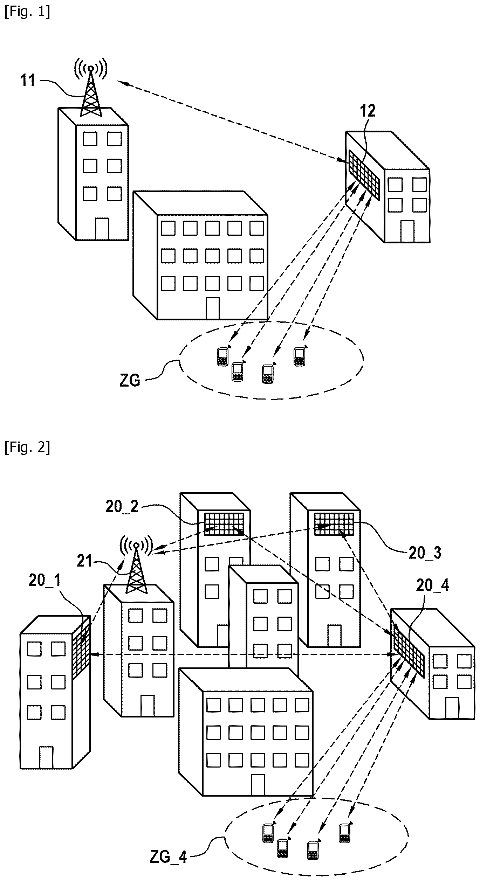

Pour cette raison, une RIS constitue un moyen efficace pour permettre des échanges de données entre une station de base et des zones géographiques qui sinon resteraient mal (ou pas du tout) desservies. Cet aspect est par exemple illustré avec la figure 1 qui représente schématiquement un exemple de système de communication sans fil utilisant une RIS 12.

Tel qu'illustré par la figure 1, le système de communication sans fil comporte une station de base 11 installée au sommet d'un immeuble, qui doit échanger des données

(sur un lien descendant et/ou un lien montant) avec des terminaux utilisateurs situés dans une zone géographique ZG à desservir. Dans cet exemple, les chemins directs entre la station de base 11 et la zone géographique ZG à desservir sont obstrués par des bâtiments, de sorte que les signaux radioélectriques empruntant ces chemins directs sont fortement atténués, voire bloqués.

En plaçant la RIS 12 sur un immeuble adjacent, il est possible d'améliorer la réflexion des signaux radioélectriques incidents par cet immeuble adjacent, et de favoriser ainsi un chemin indirect entre la zone géographique ZG et la station de base 11, par l'intermédiaire de la RIS 12. A cet effet, un dispositif de contrôle (non représenté sur la figure 1, et par exemple intégré à la station de base 11), détermine des déphasages appropriés des éléments de réflexion de la RIS 12 pour permettre à cette dernière de desservir la zone géographique ZG. Une fois déterminés, ces déphasages sont transmis à la RIS 12 via un réseau d'amenée (« backhaul network » dans la littérature anglo-saxonne). Un module de commande de la RIS 12 permet alors de contrôler les éléments de réflexion pour que ces derniers introduisent des déphasages correspondant à ceux déterminés par le dispositif de contrôle.

Les avantages liés à l'utilisation d'une RIS ne limitent pas à la possibilité de desservir des zones qui sinon resteraient mal (ou pas du tout) desservies. En effet, la consommation énergétique d'une RIS est négligeable par rapport à celle d'une station de base. En outre, une RIS est plus simple à installer d'un point de vue technique et règlementaire. Tous ces aspects justifient le grand intérêt porté à cette technologie ainsi que la volonté des opérateurs d'accélérer son développement, notamment dans le cadre du déploiement de systèmes de communication sans fil de type 5G-Advanced ou 6G particulièrement adaptés au contexte de multiplexage spatial de différents terminaux utilisateurs (« multi-user multiple input multiple output », MU-MIMO dans la littérature anglo-saxonne).

Il n'en reste pas moins que l'utilisation de la seule RIS 12 pour créer un chemin indirect entre la station de base 11 et la zone géographique ZG peut ne pas suffire pour permettre à une pluralité de terminaux d'être desservis avec une qualité de service suffisante.

En effet, lorsque la station de base 11 comporte un réseau d'antennes comportant une pluralité d'antennes, le nombre maximal de terminaux utilisateurs pouvant être multiplexés spatialement, lorsque les canaux de propagation sont suffisamment décorrélés entre eux, correspond au minimum entre le nombre d'antennes du réseau d'antennes de la station de base 11 et le nombre d'éléments de la RIS 12.

En pratique, le nombre de terminaux utilisateurs pouvant effectivement être multiplexés spatialement dépend du rang de la matrice du canal de propagation entre les différents terminaux utilisateurs et les différentes antennes du réseau d'antennes de la station de base 11. Toutefois, dans le cas du système de communication sans fil de la figure 1 dans lequel une RIS 12 est utilisée pour étendre la couverture d'un service dans des cas de propagation très dégradée, ce rang ne peut pas être supérieur au rang de la matrice du canal de propagation entre les différentes antennes du réseau d'antennes de la station de base 11 et les différents éléments de la RIS 12. Or cette matrice du canal de propagation entre la station de base 11 et la RIS 12 peut présenter en pratique un rang assez faible, en particulier dans le cas de fréquences supérieures à 30 Gigahertz (GHz) (par exemples pour des ondes millimétriques), voire supérieures à 1 Térahertz (THz), et/ou dans le cas où la RIS 12 se trouve en situation de visibilité directe (« line of sight », LOS dans la littérature anglo-saxonne) avec la station de base 11. Ainsi, dans un tel cas, le canal de propagation entre la station de base 11 et la RIS 12 agit comme un goulot d'étranglement qui peut fortement limiter les performances atteignables en termes de gain de multiplexage spatial.

Pour remédier à ces inconvénients, il a été proposé de positionner entre une station de base et une zone géographique à desservir une pluralité de RISs. Plus particulièrement, ladite pluralité de RISs comporte une RIS dite « principale » et une pluralité de RISs dites « intermédiaires » :

- la RIS principale étant agencée entre les RISs intermédiaires et la zone géographique à desservir,
- les RISs intermédiaires étant agencées entre la station de base et la RISs principale.

Par « RIS principale agencée entre les RISs intermédiaires et la zone géographique à desservir », on entend que, dans le sens descendant (resp. dans le sens montant), des signaux radioélectriques provenant de chaque RIS intermédiaire (resp. provenant de la zone géographique) atteignent la zone géographique (resp. chaque RIS intermédiaire) via ladite RIS principale, après réflexion par celle-ci. De manière analogue, par « RIS intermédiaire agencée entre la station de base et la RIS principale », on entend que, dans le sens descendant (resp. dans le sens montant), des signaux radioélectriques provenant de la station de base (resp. provenant de la RIS principale) atteignent la RIS principale (resp. la station de base) via une RIS intermédiaire, après réflexion par celle-ci.

Il résulte notamment de ces considérations qu'une RIS principale est agencée plus près de la zone géographique à desservir que les RISs intermédiaires.

Une telle configuration dans laquelle est utilisée une pluralité de RISs est par exemple illustrée avec la figure 2.

Dans la figure 2, et selon des considérations similaires à celles décrites ci-avant pour la figure 1, le système de communication sans fil comporte une station de base 21 qui doit échanger des données avec des terminaux utilisateurs situés dans une zone géographique ZG à desservir. Le système de communication sans fil comporte en outre une pluralité de RISs, à savoir une RIS principale 20_4 et trois RISs intermédiaires 20_1, 20_2, 20_3.

Tel qu'illustré par la figure 2, certains au moins des signaux radioélectriques provenant de la station de base 21 peuvent atteindre la zone géographique ZG en étant réfléchis d'abord par les RISs intermédiaires 20_1, 20_2, 20_3, puis par la RIS principale 20_4, et inversement, selon le sens montant ou descendant considéré.

L'introduction des RISs intermédiaires 20_1, 20_2, 20_3 permet d'augmenter le rang de la matrice du canal de propagation entre la station de base 21 et la RIS principale 20_4, en augmentant le nombre de chemins indirects exploitables entre ladite station de base 21 et ladite RIS principale 20_4, chaque RIS intermédiaire 20_1, 20_2, 20_3 permettant d'introduire un chemin indirect distinct entre ladite station de base 21 et ladite RIS principale 20_4.

La cellule de communication desservie par la station de base 21 couvre toutefois une zone qui s'étend au-delà de la seule zone géographique ZG. En conséquence, des terminaux utilisateurs qui se situent dans la cellule desservie par la station de base 21, mais néanmoins en dehors de la zone géographique ZG, ne sont pas en mesure de profiter de l'avantage lié à l'augmentation du rang de la matrice du canal de propagation entre la station de base 21 et la RIS principale 20_4.

Exposé de l'invention

La présente invention a pour objectif de remédier à tout ou partie des inconvénients de l'art antérieur, notamment ceux exposés ci-avant, en proposant une solution qui permet, à partir d'un ensemble donné de RISs, d'améliorer la transmission de données entre un point d'accès (ex. : une station de base) et au moins un terminal utilisateur situé dans une zone géographique couverte par le point d'accès.

A cet effet, et selon un premier aspect, l'invention concerne un procédé de contrôle d'un ensemble E de surfaces intelligentes reconfigurables associées à un point d'accès. Ledit procédé comporte des étapes de :

- sélection, parmi l'ensemble E, d'au moins une surface comme « surface intermédiaire » et d'au moins une surface comme « surface principale », chaque surface de l'ensemble E étant associée à une zone géographique donnée couverte par le point d'accès et qu'elle se destine à desservir si elle est sélectionnée comme surface principale, chaque surface intermédiaire étant positionnée entre le point d'accès et une surface principale ainsi que destinée à réfléchir vers ladite surface principale des signaux émis par le point d'accès pour échanger des données avec au moins un terminal utilisateur situé dans la zone géographique desservie par ladite surface principale, la sélection étant effectuée de sorte à optimiser un critère déterminé de performance de communication pour des antennes situées dans la zone géographique desservie par chaque surface principale,
- détermination de déphasages d'éléments de réflexion desdites au moins une surface intermédiaire et au moins une surface principale sélectionnées,
- contrôle des éléments de réflexion desdites au moins une surface intermédiaire et au moins une surface principale sélectionnées au moyen des déphasages déterminés.

Ce premier aspect de l'invention s'inscrit dans le contexte d'un lien de communication descendant entre le point d'accès et ledit au moins un terminal utilisateur avec lequel des données sont échangées. Il importe toutefois de noter que ces dispositions ne sont pas limitatives de l'invention, cette dernière pouvant également être mis en oeuvre, suivant des dispositions techniques similaires, dans le contexte d'un lien de communication montant entre ledit au moins un terminal utilisateur et le point d'accès.

Ainsi, et selon un autre aspect, l'invention concerne un procédé de contrôle d'un ensemble E de surfaces intelligentes reconfigurables associées à un point d'accès. Ledit procédé comporte des étapes de :

- sélection, parmi l'ensemble E, d'au moins une surface comme « surface intermédiaire » et d'au moins une surface comme « surface principale », chaque surface de l'ensemble E étant associée à une zone géographique donnée couverte par le point d'accès et depuis laquelle elle se destine à recevoir des signaux émis par au moins un terminal utilisateur pour échanger des données avec le point d'accès si elle est sélectionnée comme surface principale, chaque surface intermédiaire étant positionnée entre le point d'accès et une surface principale depuis laquelle la surface intermédiaire se destine à recevoir des signaux pour les réfléchir vers le point d'accès, la sélection étant effectuée de sorte à optimiser un critère déterminé de performance de communication pour au moins un terminal utilisateur situé dans la zone géographique desservie par chaque surface principale,
- détermination de déphasages d'éléments de réflexion desdites au moins une surface intermédiaire et au moins une surface principale sélectionnées,
- contrôle des éléments de réflexion desdites au moins une surface intermédiaire et au moins une surface principale sélectionnées au moyen des déphasages déterminés.

Le procédé de contrôle selon l'invention permet donc d'attribuer, pour chacune des surfaces intelligentes reconfigurables de l'ensemble E, un rôle à jouer en tant que surface intermédiaire ou surface principale, étant entendu que la détermination d'un rôle de surface intermédiaire pour une surface donnée de l'ensemble E définit une association de cette surface avec une surface principale vers laquelle elle se destine à réfléchir des signaux initialement émis par la station de base dans le contexte d'un lien de communication descendant (respectivement en provenance de laquelle elle se destine à recevoir des signaux initialement émis par au moins un terminal utilisateur dans le contexte d'un lien de communication montant).

Par la suite, le procédé de contrôle selon l'invention propose que chacune des surfaces intelligentes reconfigurables de l'ensemble E soit alors configurée de manière effective pour jouer le rôle qui lui a été attribué.

Ainsi, et contrairement à l'art antérieur, les avantages liés au déploiement d'une pluralité de surfaces intelligentes reconfigurables (i.e. amélioration du rang) peuvent être mis au service de différentes zones géographiques de la cellule de communication desservie par la station de base.

En effet, le fait de pouvoir déterminer les rôles respectivement joués par les surfaces intelligentes reconfigurables permet de s'affranchir des limitations découlant d'une situation figée et imposée en termes de rôles joués, et donc en définitive d'être en mesure de faire varier les différentes zones géographiques avec lesquelles des données sont échangées.

De cette manière, il est par exemple possible de tenir compte de la répartition de terminaux utilisateurs dans ces zones ainsi que de leur dynamique tout en garantissant d'excellentes performances de communication.

Dans des modes particuliers de mise en oeuvre, le procédé de contrôle (dans le contexte d'un lien de communication descendant et/ou d'un lien de communication montant) peut comporter en outre l'une ou plusieurs des caractéristiques suivantes, prises isolément ou selon toutes les combinaisons techniquement possibles.

Dans des modes particuliers de mise en oeuvre, les étapes de sélection, de détermination des déphasages et de contrôle forment un ensemble d'étapes, ledit ensemble d'étapes étant itéré.

Le fait d'itérer ces étapes offre la possibilité de mettre à jour dans le temps la sélection des surfaces intelligentes reconfigurables de l'ensemble E, c'est-à-dire de modifier la répartition des rôles qui leur ont été attribués. Autrement dit, l'avantage découlant de la possibilité de sélectionner les surfaces comme surfaces intermédiaires ou principales pour s'adapter à un contexte de communication à un instant donné

(zones à desservir, présences de terminaux dans ces zones, qualité de service à atteindre pour les terminaux desservis, etc.) est ici étendu dans le temps pour tenir compte d'une possible évolution de ce contexte.

Dans des modes particuliers de mise en oeuvre, ledit ensemble d'étapes est itéré suivant un pas de temps déterminé correspondant au temps de cohérence associé aux signaux émis par le point d'accès ou ledit au moins un terminal utilisateur, ou à une fraction déterminée dudit temps de cohérence.

Le fait de choisir un pas de temps correspondant au temps de cohérence ou bien à une fraction de celui-ci relève par exemple de considérations liées à un compromis entre optimalité du critère de performance de communication et charge de calcul. Plus particulièrement, si le pas de temps est choisi égal à une fraction du temps de cohérence, l'optimalité du critère de performance de communication est privilégiée par rapport à la réduction de la charge de calcul (et vice versa si le pas de temps est choisi égal au temps de cohérence).

Dans des modes particuliers de mise en oeuvre, le critère de performance de communication est représentatif d'au moins un élément parmi :

- un débit des données pouvant être échangées entre le point d'accès et au moins un terminal utilisateur situé dans la zone géographique desservie par chaque surface principale,
- un niveau de qualité de service des échanges de données entre le point d'accès et au moins un terminal utilisateur situé dans la zone géographique desservie par chaque surface principale,
- une énergie requise pour réaliser des échanges de données entre le point d'accès et au moins un terminal utilisateur situé dans la zone géographique desservie par chaque surface principale,
- un rapport signal sur bruit des échanges de données entre le point d'accès et au moins un terminal utilisateur situé dans la zone géographique desservie par chaque surface principale.

Dans des modes particuliers de mise en oeuvre, dans lesquels le lien de communication considéré est descendant, l'optimisation du critère de performance prend en compte, en tant que variable d'optimisation et pour au moins un terminal utilisateur situé dans la zone géographique desservie par une surface principale, un paramètre représentatif du fait que ledit au moins un terminal utilisateur est desservi ou non.

Ces dispositions sont avantageuses en ce qu'elles permettent de tenir davantage compte du fait que les terminaux utilisateurs peuvent avoir une dynamique qui leur est propre au sein d'une cellule de communication desservie par le poin d'accès. Par « dynamique » des terminaux utilisateurs, on fait référence ici au fait que ces derniers peuvent être mobiles au sein d'une zone géographique, et peuvent donc la quitter ou y entrer au cours du temps. En d'autres termes, la liste des terminaux utilisateurs desservis n'est pas figée et peut être adaptée au moment de la résolution du problème d'optimisation.

Dans des modes particuliers de mise en oeuvre, dans lesquels le lien de communication considéré est descendant, le procédé de contrôle comporte, préalablement à l'étape de sélection, une étape de détermination, pour chaque surface de l'ensemble E, des terminaux utilisateurs à desservir par ladite surface si celle-ci est sélectionnée comme surface principale.

Ces dispositions sont avantageuses en ce qu'elles permettent de figer la liste des terminaux utilisateurs à desservir au moment de l'optimisation du critère de performance de communication, de sorte à limiter le nombre de paramètres d'optimisation de ce critère et ainsi réduire la charge de calcul.

Dans des modes particuliers de mise en oeuvre, ledit pas de temps correspond au temps de cohérence, ledit temps de cohérence est échantillonné en une pluralité de fractions déterminées, l'optimisation du critère de performance prenant en compte, en tant que variable d'optimisation et pour chaque surface de l'ensemble E, un paramètre représentatif du nombre de fractions du temps de cohérence pendant lesquelles ladite surface est sélectionnée comme surface principale.

Ces dispositions permettent d'obtenir un compromis efficace en termes de rapport optimalité/charge de calculs. En effet, la fréquence à laquelle le problème d'optimisation est résolu (temps de cohérence) limite certes la prise en compte de la dynamique des terminaux utilisateurs, mais permet néanmoins de réduire la charge de calculs. En tout état de cause, ce problème d'optimisation permet également de tenir compte de la proportion de temps (sur la durée totale du temps de cohérence) pendant laquelle une surface joue le rôle de surface principale, ce qui contribue avantageusement à l'amélioration dudit rapport optimalité/charge de calculs.

Dans des modes particuliers de mise en oeuvre, dans lesquels le lien de communication considéré est descendant, l'optimisation du critère de performance est paramétrée de sorte que :

- la sélection d'une pluralité de surfaces principales est permise, et
- la ou les surfaces intermédiaires sélectionnées pour réfléchir des signaux vers une surface principale sont distinctes de la ou des surfaces intermédiaires sélectionnées pour réfléchir des signaux vers une autre surface principale.

Ces dispositions sont avantageuses en ce qu'elles permettent de partitionner les surfaces de l'ensemble E en une pluralité de groupes de surfaces, chaque groupe comportant une surface principale et au moins une surface intermédiaire. Ainsi, en un même instant, plusieurs surfaces principales peuvent être actives, et donc plusieurs zones géographiques peuvent être desservies. De surcroit, chaque zone est desservie par un tel groupe de surfaces pour lequel le rang de la matrice du canal de propagation entre le point d'accès et la surface principale dudit groupe est augmenté.

Dans des modes particuliers de mise en oeuvre, dans lesquels le lien de communication considéré est descendant, l'étape de détermination des déphasages est mise en oeuvre de sorte que la puissance des signaux réfléchis par une surface intermédiaire vers une surface principale est supérieure à un seuil donné ou maximisée, ladite puissance étant une fonction paramétrée par lesdits déphasages, des angles des signaux émis par la station de base vers ladite surface intermédiaire ainsi que des angles des signaux réfléchis par ladite surface intermédiaire vers ladite surface principale.

Dans des modes particuliers de mise en oeuvre, dans lesquels le lien de communication considéré est montant, l'étape de détermination des déphasages est mise en oeuvre de sorte que la puissance des signaux réfléchis par une surface intermédiaire vers le point d'accès est supérieure à un seuil donné ou maximisée, ladite puissance étant une fonction paramétrée par lesdits déphasages, des angles des signaux réfléchis par ladite au moins une surface principale vers ladite surface intermédiaire ainsi que des angles des signaux réfléchis par ladite surface intermédiaire vers le point d'accès.

Le fait de déterminer les déphasages d'une surface intermédiaire de cette manière permet de tenir compte de la réalité physique précise dans laquelle se trouve ladite surface intermédiaire.

Cette réalité physique fait référence :

- dans le contexte d'un lien de communication descendant, aux angles des signaux atteignant la surface intermédiaire depuis le point d'accès (il s'agit donc d'angles « d'incidence » depuis le point d'accès vers la surface intermédiaire) ainsi qu'aux angles de signaux atteignant ladite au moins une surface principale depuis la surface intermédiaire (il s'agit donc d'angles « de départ » depuis la surface intermédiaire vers ladite au moins une surface principale),
- dans le contexte d'un lien de communication montant, aux angles des signaux atteignant la surface intermédiaire depuis ladite au moins une surface principale (il s'agit donc d'angles « d'incidence » depuis ladite au moins une surface principale vers la surface intermédiaire) et aux angles de signaux atteignant le point d'accès depuis la surface intermédiaire (il s'agit donc d'angles « de départ » depuis la surface intermédiaire vers le point d'accès)..

Procéder de la sorte permet de configurer la surface intermédiaire de manière avantageuse pour que la réflexion de signaux vers ladite au moins une surface principale dans le contexte d'un lien de communication descendant (respectivement vers le point d'accès dans le contexte d'un lien de communication montant) soit effectuée de manière beaucoup plus dirigée et concentrée que dans l'art antérieur. De cette manière, la surface principale peut desservir les antennes des équipements utilisateurs situés dans la zone géographique de manière très efficace dans le contexte d'un lien de communication descendant (respectivement des données émises par des équipements utilisateurs situés dans la zone géographique parviennent au point d'accès de manière très efficace dans le contexte d'un lien de communication montant).

Dans des modes particuliers de mise en oeuvre, les déphasages sont également déterminés de sorte que la puissance de signaux réfléchis par une surface intermédiaire vers au moins une autre surface intermédiaire est inférieure à un seuil donné ou minimisée.

On comprend en effet que si chaque surface intermédiaire est configurée pour réfléchir des signaux provenant du point d'accès vers une surface principale dans le contexte d'un lien de communication descendant, ou provenant d'une surface principale vers le point d'accès dans le contexte d'un lien de communication montant, il peut exister un risque que certaines de ces réflexions soient non contrôlées de sorte à être finalement dirigées ailleurs, en particulier donc vers une autre surface intermédiaire. Les présentes dispositions sont donc avantageuses en ce qu'elles permettent de réduire les interférences vis-à-vis des autres surfaces intermédiaires.

Dans des modes particuliers de mise en oeuvre, dans lesquels le lien de communication considéré est descendant, les déphasages sont également déterminés de sorte que la puissance de signaux réfléchis par une surface intermédiaire directement vers au moins un terminal utilisateur situé dans la zone géographique desservie par la surface principale vers laquelle des signaux sont réfléchis par ladite surface intermédiaire est inférieure à un seuil donné ou minimisée.

Suivant des considérations similaires à celles mentionnées ci-avant, les présentes dispositions sont avantageuses en ce qu'elles permettent de réduire les interférences résultant de réflexions non contrôlées dirigées directement vers des antennes.

Selon un autre aspect, l'invention concerne un programme d'ordinateur comportant des instructions pour la mise en oeuvre d'un procédé de contrôle selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un autre aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect, l'invention concerne un dispositif de contrôle comportant des moyens configurés pour mettre en oeuvre un procédé de contrôle selon l'invention.

Selon un autre aspect, l'invention concerne un système de communication sans fil comportant un point d'accès, un ensemble E de surfaces intelligentes reconfigurables associées au point d'accès, ainsi qu'un dispositif de contrôle selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1, déjà décrite, représente schématiquement un exemple de système de communication sans fil selon l'état de la technique, dans lequel une unique RIS est utilisée pour desservir une zone géographique donnée ;

[Fig. 2] la figure 2, déjà décrite, représente schématiquement un exemple de système de communication sans fil selon l'état de la technique, dans lequel une pluralité de RISs intermédiaires et une RIS principale sont utilisées pour desservir une zone géographique donnée ;

[Fig. 3] la figure 3 représente schématiquement un système de communication sans fil selon un mode particulier de réalisation de l'invention ;

[Fig. 4] la figure 4 est une représentation schématique alternative de la figure 3, dans laquelle des RISs appartenant au système de communication sans fil sont respectivement associées à des zones géographiques à desservir ;

[Fig. 5] la figure 5 représente schématiquement un exemple d'architecture matérielle d'un dispositif de contrôle appartenant au système de communication des figures 3 et 4 ;

[Fig. 6] la figure 6 représente, sous forme d'ordinogramme, un mode particulier de mise en oeuvre d'un procédé de contrôle exécuté par le dispositif de la figure 5.

Description de modes de réalisation

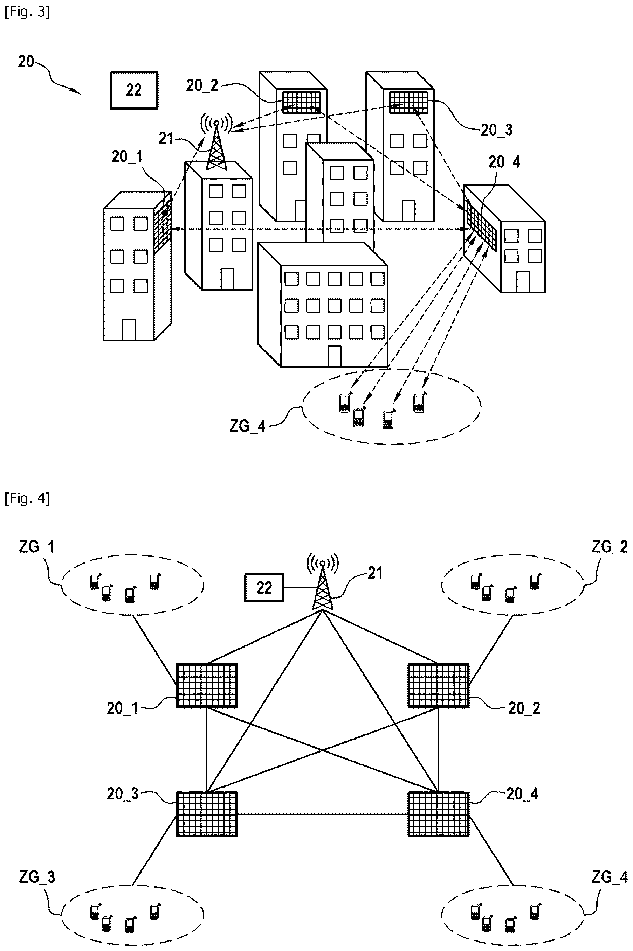

La figure 3 représente schématiquement un système de communication sans fil 20 selon un mode particulier de réalisation de l'invention.

Le système 20 se base sur une configuration similaire à celle décrite ci-avant en référence à la figure 2. En conséquence, les éléments mentionnés en relation avec la figure 2 sont ici repris avec des références numériques identiques. Il importe toutefois de noter dès à présent que la configuration de la figure 3 se distingue de celle de la figure 2 au moins en ce que les rôles respectivement joués par les RISs déployées (i.e. un rôle de RIS intermédiaire ou bien un rôle de RIS principale) sont susceptibles d'être modifiés suivant des caractéristiques spécifiques à l'invention. Dit encore autrement, et comme décrit plus en détails ultérieurement, la configuration de la figure 3 permet de déterminer de manière dynamique, en fonction d'un contexte de communication (zones à desservir, présences de terminaux dans ces zones, qualité de service à atteindre pour les terminaux desservis, etc.), les rôles joués par les RISs déployées, là où, a contrario, l'état de la technique (voir figure 2) se limite à une configuration figée en termes de rôles joués pour lesdites RISs.

Tel qu'illustré par la figure 3, le système 20 comporte une station de base 21 desservant ici au moins une cellule de communication (non illustrée sur les figures), ainsi qu'une pluralité de RISs 20_1, 20_2, 20_3, 20_4. La pluralité de RIS 20_i (i étant un indice entier compris entre 1 et 4) appartenant au système 20 forment un ensemble de RIS noté ci-après « ensemble E ».

La station de base 21 comporte un réseau d'antennes (non représenté sur les figures) comportant un nombre entier M >1 antennes. Le réseau d'antennes est par exemple un réseau linéaire uniforme (« uniform linear array », ULA dans la littérature anglo-saxonne) dans lequel les M antennes sont agencées avec un écartement constant suivant une dimension, ou bien un réseau rectangulaire planaire uniforme (« uniform rectangular planar array », URPA dans la littérature anglo-saxonne) dans lequel les M antennes sont coplanaires et agencées suivant deux dimensions avec des écartements respectifs constants, etc.

Chaque RIS 20_i de l'ensemble E est associée à une zone géographique donnée ZG_i de la cellule qu'elle se destine à desservir si elle est sélectionnée, parmi les RISs de l'ensemble E, comme RIS principale (i.e. si son rôle est déterminé comme étant celui de RIS principale).

Seule la zone géographique ZG_4 est illustrée dans la figure 3 par souci de lisibilité. L'ensemble desdites zones géographiques ZG_i est néanmoins illustré de manière schématique et à titre d'exemple uniquement dans la figure 4 qui constitue une représentation alternative de la figure 3.

Tel qu'illustré par la figure 4, lesdites zones géographiques ZG_i respectivement associées aux RIS 20_i de l'ensemble E sont distinctes entre elles. Par ailleurs, les RISs 20_i de l'ensemble E sont reliées entre elles dans la figure 4 par des traits symbolisant des chemins indirects (distincts) entre la station de base 21 et les différentes zones géographiques ZG_i selon que telle ou telle RIS joue un rôle de RIS intermédiaire ou bien de RIS principale.

Il convient de noter que le fait de considérer quatre RISs 20_1, 20_2, 20_3, 20_4 ne constitue qu'une variante d'implémentation de l'invention. D'une manière générale, aucune limitation n'est attaché au nombre de RISs pouvant être envisagé, comme par exemple plus ou moins de quatre RISs. Ce nombre peut d'ailleurs être supérieur ou inférieur au nombre d'antennes équipant la station de base 21.

Suivant des considérations similaires, le système 20 peut également comporter une pluralité de stations de base, et chaque station de base peut desservir une ou plusieurs cellules de communication. En pratique, les principes décrits ci-après peuvent être étendus au cas où plusieurs stations de base 21 permettent de desservir les zones géographiques ZG_i.

Par ailleurs, le fait de considérer que les signaux incidents destinés à être réfléchis par les RISs intermédiaires 20_j sont émis par une station de base ne constitue qu'une variante d'implémentation de l'invention. De manière plus générale, l'émission desdits signaux peut être réalisée par tout point d'accès de conception connue en soi.

De surcroit, dans l'exemple de la figure 4, chaque zone géographique ZG_i est représentée comme étant une zone connexe (i.e. d'un seul tenant). Toutefois, rien n'exclut d'envisager qu'au moins une desdites zones ZG_i comporte une pluralité de sous-zones discontinues (i.e. chacune desdites sous-zones forme une composante connexe de ladite zone).

Pour la suite de la description, on considère de manière nullement limitative qu'aucun rôle n'a pour l'instant été déterminé pour chacune desdites RISs 20_i, la détermination des rôles étant plus spécifiquement effectuée lors de la mise en oeuvre d'un procédé de contrôle selon l'invention décrit ci-après. Il convient toutefois de noter que ces dispositions ne sont pas limitatives de l'invention, et que rien n'exclut d'envisager que des rôles aient été préalablement déterminés pour chacune desdites RISs 20_i (par exemple comme dans le cas de la figure 2) selon une configuration initiale, mais sont néanmoins destinés à être modifiés au moyen dudit procédé de contrôle.

La distribution spatiale des RISs 20_i de l'ensemble E vise à améliorer les performances des communications entre la station de base 21 et des antennes se trouvant dans chacune desdites zones géographiques ZG_i à desservir.

Plus particulièrement, dans le mode de réalisation décrit ici, on considère de manière nullement limitative que lesdites antennes équipent des terminaux utilisateurs (ou équipements utilisateurs ou UE pour « User Equipment » en anglais), chaque terminal utilisateur étant équipé dans l'exemple envisagé ici d'une seule antenne. Un terminal utilisateur peut par exemple prendre la forme d'un téléphone mobile, comme par exemple un téléphone mobile intelligent (encore dit « smartphone » en anglais), d'une tablette numérique, d'un ordinateur portable, d'un assistant personnel, d'une montre connectée, d'une liseuse électronique, etc. D'une manière générale, aucune limitation n'est attachée à la forme prise par un terminal utilisateur.

L'invention n'est bien entendu pas limitée au cas où chaque terminal utilisateur est équipé d'une unique antenne. Ainsi, rien n'exclut d'envisager qu'un ou plusieurs terminaux utilisateurs situés dans la zone géographique ZG soient équipés de plusieurs d'antennes.

Les emplacements en lesquels sont implémentées les différentes RISs 20_i de l'ensemble E dépendent de différents critères. Par exemple, indépendamment des positions relatives des différentes RISs 20_i entre elles, lesdites RIS 20_i peuvent être réparties spatialement au sein de la cellule de communication de sorte que les zones géographiques ZG_i associées couvrent des zones difficiles d'accès en termes de transmission directe de données depuis la station de base 21

Par ailleurs, et comme mentionné ci-avant, le rang de la matrice du canal de propagation entre la station de base 21 et une RIS de l'ensemble E jouant un rôle de RIS principale peut être amélioré si les autres RISs jouant un rôle de RIS intermédiaire sont distribuées spatialement par rapport à la station de base 21 et/ou par rapport à la RIS principale.

En pratique, et à titre nullement limitatif, considérons une situation fictive dans laquelle une configuration donnée de répartition de rôles (intermédiaire, principale) entre les différentes RIS de l'ensemble E est telle que la RIS 20_4 est une RIS principale, et les autres RIS 20_j (j étant un indice entier compris entre 1 et 3) sont des RISs intermédiaires. Alors, de manière préférée, lesdites RISs intermédiaires 20_j peuvent être agencées dans des directions respectives différentes par rapport à :

- la station de base 21, c'est-à-dire si l'angle mesuré au niveau de la station de base 21 entre les directions de deux RISs intermédiaires 20_j, 20_j' (j et j' étant deux indices distincts) est non nul (par exemple supérieur à 5° ou supérieur à 10°) pour chaque paire de RISs intermédiaires 20_j, 20_j' ; et/ou
- la RIS principale 20_4, c'est-à-dire si l'angle mesuré au niveau de la RIS principale 20_4 entre les directions de deux RISs intermédiaires 20_j, 20_j' est non nul (par exemple supérieur à 5° ou supérieur à 10°) pour chaque paire de RISs intermédiaires 20_j, 20_j'.

Il est à noter que la direction d'une RIS intermédiaire 20_j par rapport à la station de base 21 (resp. par rapport à une RIS principale 20_4) correspond à la direction suivant laquelle des signaux radioélectriques émis par la station de base 21 (resp. réfléchis par la RIS intermédiaire 20_j) arrivent au niveau de ladite RIS intermédiaire 20_j (resp. partent de la RIS intermédiaire 20_j) pour être réfléchis vers la RIS principale 20_4. En d'autres termes, il s'agit de la direction du vecteur reliant la station de base 21 (resp. la RIS intermédiaire 20_j) à la RIS intermédiaire 20_j (resp. à la RIS principale 20_4) en situation de visibilité directe (« line of sight », LOS dans la littérature anglo-saxonne). Ce vecteur peut notamment être caractérisé de manière angulaire au moyen de différentes composantes (élévation, azimut, et éventuellement polarisation), comme cela est décrit en détail ultérieurement.

Il convient toutefois de noter que, dans le cas où il n'existe pas de chemin direct entre la station de base 21 (resp. la RIS intermédiaire 20_j) et la RIS intermédiaire 20_j (resp. la RIS principale 20_4), la direction entre ces deux entités se définit alors à partir du chemin indirect principal (c'est-à-dire le plus énergétique) les reliant.

De préférence, en particulier dans le cas où les échanges de données avec les terminaux utilisateurs utilisent des fréquences élevées (par exemple supérieures à 30 GHz voire supérieures à 1 THz) :

- la station de base 21 est en situation de visibilité directe (LOS) avec tout ou partie des RISs intermédiaires 20_j, et/ou
- la RIS principale 20_4 est en situation de visibilité directe (LOS) avec tout ou partie de la zone géographique ZG_4 à desservir, et/ou
- la RIS principale 20_4 est en situation de visibilité directe (LOS) avec tout ou partie des RISs intermédiaires 20_j.

En pratique, pour améliorer le rang de la matrice du canal de propagation entre la station de base 21 et la RIS principale 20_4, il est possible de déterminer des positions optimales des différentes RISs intermédiaires 20_j par simulation, en utilisant par exemple un modèle 3D de l'environnement dans lequel lesdites RISs intermédiaires 20_j doivent être installées. Il est également possible d'effectuer des tests de rang en installant physiquement les différentes RISs intermédiaires 20_j dans des positions possibles de l'environnement et de conserver, parmi toutes les positions possibles testées, les positions pour lesquelles le meilleur rang a pu être obtenu.

Les aspects mentionnés ci-avant en référence aux positions respectives des RISs de l'ensemble E entre elles, mais également vis-à-vis de la station de base 21 et des zones géographiques, ont été décrits dans le cadre de la configuration spécifique où la RIS 20_4 est une RIS principale, et les autres RIS 20_j (j étant un indice entier compris entre 1 et 3) sont des RISs intermédiaires. On comprend néanmoins qu'ils s'appliquent de la même manière à toute autre configuration en termes de répartition des rôles joués entre les différentes RISs 20_i de l'ensemble E.

Aussi, dans le cadre de la présente invention, il est considéré que les RISs 20_i de l'ensemble E sont fixes, leurs positions respectives résultant d'une telle procédure consistant à rechercher des emplacements appropriés pour satisfaire tout ou partie des critères précités (transmission vers une ou plusieurs zones difficiles d'accès, amélioration du rang) pour une ou plusieurs configurations de répartition des rôles, étant entendu que cette répartition des rôles est destinée à être modifiée dans le temps.

De manière connue en soi, chaque RIS 20_i comporte un module de commande (non représenté sur les figures) et des éléments de réflexion (non représentés sur les figures) dont des propriétés de réflexion sont modifiables par le module de commande de sorte à influencer la façon dont des signaux radioélectriques incidents sur lesdits éléments de réflexion sont réfléchis par ceux-ci.

Les éléments de réflexion d'une RIS 20_i peuvent être de tout type connu de la personne du métier. Des RISs différentes du système 20 peuvent notamment utiliser des types différents d'éléments, ou bien le même type d'éléments.

Il est à noter que le nombre d'éléments par RIS 20_i peut varier d'une RIS à une autre. Rien n'exclut cependant, suivant certains exemples, d'avoir le même nombre d'éléments pour toutes les RISs 20_i de l'ensemble E.

Le module de commande comporte par exemple au moins un processeur et au moins une mémoire (disque dur magnétique, mémoire électronique, disque optique, ou tout type de support d'enregistrement lisible par ordinateur) dans laquelle est mémorisé un produit programme d'ordinateur, sous la forme d'un ensemble d'instructions de code de programme à exécuter pour modifier les propriétés de réflexion des éléments de réflexion d'une RIS 20_i. Alternativement ou en complément, le module de commande peut comporter un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie des modifications des propriétés de réflexion des éléments d'une RIS 20_i.

Il est à noter que par « modifications des propriétés de réflexion des éléments de réflexion d'une RIS 20_i », il est fait référence dans la présente divulgation au fait de modifier les déphasages respectivement introduits par les éléments de réflexion de ladite RIS 20_i.

Il faut également noter que les déphasages (i.e. les valeurs de déphasage) utilisés par le module de commande d'une RIS 20_i pour modifier lesdites propriétés de réflexion ne sont pas déterminés, dans le mode de réalisation décrit ici, par le module de commande lui-même, mais par un dispositif externe aux RISs de l'ensemble E, dit « dispositif de contrôle 22 », appartenant au système de communication sans fil 20.

Plus particulièrement, le dispositif de contrôle 22 est configuré pour réaliser des traitements permettant de déterminer des déphasages (i.e. des valeurs de déphasage) destinés à être utilisés par les modules de commandes respectifs des RISs 20_i, en mettant en oeuvre un procédé de contrôle selon l'invention.

Dans le présent mode de réalisation, le dispositif de contrôle 22 est externe aux RIS 20_i l'ensemble E ainsi qu'à la station de base 21. Rien n'exclut cependant d'envisager que le dispositif de contrôle 24 soit intégré à la station de base 21, à l'une des RIS de l'ensemble E (de sorte que cette RIS puisse déterminer des déphasages de manière autonome) ou réparti sur plusieurs RIS de l'ensemble E.

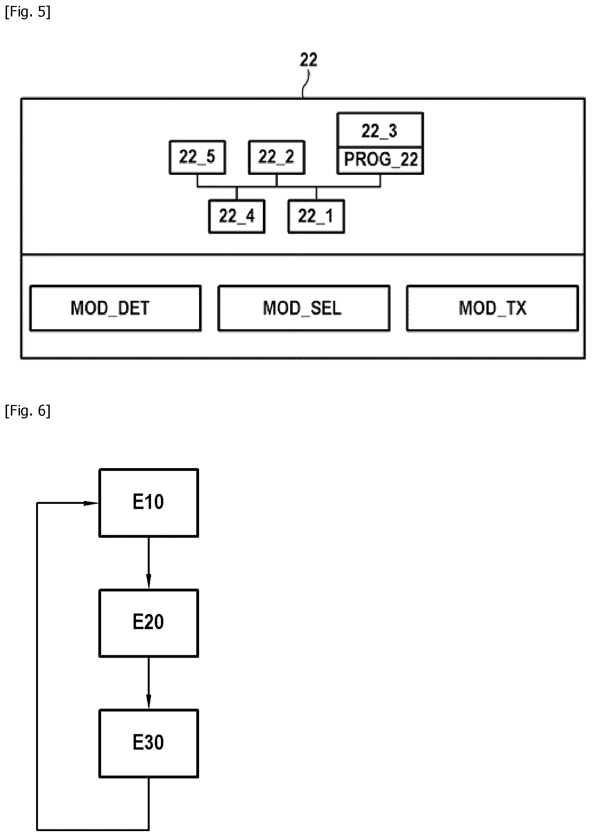

La figure 5 représente schématiquement un exemple d'architecture matérielle du dispositif de contrôle 22 appartenant au système 20 des figures 3 et 4.

Tel qu'illustré par la figure 5, le dispositif de contrôle 22 dispose de l'architecture matérielle d'un ordinateur. Ainsi, le dispositif de contrôle 22 comporte, notamment, un processeur 22_1, une mémoire vive 22_2, une mémoire morte 22_3 et une mémoire non volatile 22_4. Il dispose en outre de moyens de communication 22_5.

La mémoire morte 22_3 du dispositif de contrôle 22 constitue un support d'enregistrement conforme à l'invention, lisible par le processeur 22_1 et sur lequel est enregistré un programme d'ordinateur PROG_22 conforme à l'invention, comportant des instructions pour l'exécution d'étapes du procédé de contrôle. Le programme PROG_22 définit des modules fonctionnels du dispositif de contrôle 22, qui s'appuient ou commandent les éléments matériels 22_1 à 22_5 du dispositif de contrôle 24 cités précédemment. Ces modules fonctionnels sont illustrés sur la figure 5 à titre nullement limitatif, et sont décrits plus en détails ci-après en référence à différents modes de mise en oeuvre.

Les moyens de communication 22_5 permettent notamment au dispositif de contrôle 22 d'échanger des données avec tout équipement du système de communication sans fil 20, dont notamment les RISs 20_i de l'ensemble E via un réseau d'amenée (« backhaul network » dans la littérature anglo-saxonne). A cet effet, les moyens de communication 22_5 comportent une interface de communication, filaire ou non filaire, apte à mettre en oeuvre tout protocole adapté connu de l'homme du métier.

Dans son principe général, le procédé de contrôle selon l'invention vise à attribuer, pour chacune des RISs de l'ensemble E, un rôle à jouer en tant que RIS intermédiaire ou RIS principale, étant entendu que la détermination d'un rôle de RIS intermédiaire pour une RIS 20_i donnée de l'ensemble E définit une association de cette RIS 20_i avec une RIS principale vers laquelle elle se destine à réfléchir des signaux initialement émis par la station de base 21. Par la suite, le procédé de contrôle selon l'invention propose que chacune des RISs de l'ensemble E soit alors configurée de manière effective pour jouer le rôle qui lui a été attribué.

Il convient de noter que, comme mentionné ci-avant, le procédé de contrôle est ici mis en oeuvre à partir d'une situation dans laquelle aucun rôle n'a pour l'instant été attribué aux RISs 20_i de l'ensemble E. Il s'agit donc d'effectuer une première attribution de rôles à ces RISs 20_i, étant entendu que ces rôles peuvent ensuite être modifiés suivant des dispositions similaires à celles mises en oeuvre lors de ladite première attribution, comme détaillé ci-après. En tout état de cause, la description qui suit peut bien entendu être adaptée à la situation dans laquelle le procédé de contrôle est mis en oeuvre alors même que des rôles ont déjà été attribués, par exemple suite à une précédente mise en oeuvre du procédé de contrôle ou bien encore en raison d'autres considérations techniques (exemple : détermination aléatoire de rôles lors d'une phase d'initialisation).

La figure 6 représente, sous forme d'ordinogramme, les étapes principales du procédé de contrôle exécuté par le dispositif de contrôle 22 selon un mode particulier de mise en oeuvre.

Dans le présent mode de mise en oeuvre, le procédé de contrôle comporte une étape E10 de sélection, parmi l'ensemble E, d'au moins une RIS intermédiaire et au moins une RIS principale. Ladite étape E10 est mise en oeuvre par un module de sélection MOD_DET équipant le dispositif de contrôle 22.

Plus particulièrement, la sélection faisant l'objet de l'étape E10 est effectuée de sorte à optimiser un critère déterminé de performance de communication KPI pour des terminaux utilisateurs situés dans la zone géographique ZG_i desservie par chaque RIS 20_i sélectionnée comme surface principale.

Aucune limitation n'est attachée à la nature du critère KPI, et le choix d'un type particulier de critère KPI ne correspond qu'à une variante possible de l'invention.

Par exemple, le critère KPI est représentatif d'au moins un élément parmi :

- un débit des données pouvant être échangées entre la station de base 21 et les terminaux utilisateurs situés dans la zone géographique ZG_i desservie par chaque RIS principale. Dans ce cas, l'optimisation du critère KPI vise par exemple à maximiser ledit débit ;

- un niveau de qualité de service des échanges de données entre la station de base 21 et les terminaux utilisateurs situés dans la zone géographique ZG_i desservie par chaque RIS principale. Dans ce cas, l'optimisation du critère KPI vise par exemple à maximiser ledit niveau de qualité de service (par exemple en minimisant la latence des échanges) ;
- une énergie requise pour réaliser des échanges de données entre la station de base 21 et les terminaux utilisateurs situés dans la zone géographique ZG_i desservie par chaque RIS principale. Dans ce cas, l'optimisation du critère KPI vise par exemple à minimiser l'énergie requise pour effectuer lesdits échanges de données ;
- un rapport signal sur bruit des échanges de données entre la station de base 21 et les terminaux utilisateurs situés dans la zone géographique ZG_i desservie par chaque RIS principale. Dans ce cas, l'optimisation du critère KPI vise par exemple à avoir un rapport signal sur bruit supérieur à un seuil déterminé ou maximisé.

Dans le présent mode de mise en oeuvre, le procédé de contrôle comporte également une étape E20 de détermination de déphasages d'éléments de réflexion des RISs 20_i de l'ensemble E selon qu'elles ont été sélectionnées comme surfaces intermédiaires ou principales suite à l'exécution de l'étape E10. Ladite étape E20 est mise en oeuvre par un module de détermination MOD_DET équipant le dispositif de contrôle 22.

Comme mentionné ci-avant, et pour chacune des RISs de l'ensemble E dont le rôle a été déterminé comme étant celui d'une RIS intermédiaire, les déphasages sont déterminés de sorte que des signaux émis par la station de base 21 pour échanger des données avec les terminaux utilisateurs situés dans la ou les zones géographiques ZG_i respectivement associées à la ou les RISs de l'ensemble E jouant un rôle de RIS principale sont réfléchis par la ou les RISs de l'ensemble E jouant un rôle de RIS intermédiaire. Bien entendu, la détermination de déphasages de l'étape E20 comporte également, pour chacune des RISs de l'ensemble E dont le rôle a été déterminé comme étant celui d'une RIS principale, une détermination de déphasages pour desservir la zone géographique ZG_i qui lui est associée.

Par la suite, une fois que les déphasages ont été déterminés pour chacune des RISs 20_i de l'ensemble E, lesdits déphasages sont transmis vers chacune desdites RISs 20_i au cours d'une étape E30 de contrôle. Ladite étape E30 est mise en oeuvre par un module MOD_TX de transmission équipant le dispositif de contrôle 22 et intégré aux moyens de communication 22_5.

Il convient de noter que la transmission desdits déphasages vers chacune desdites RISs intermédiaires 20_j (i.e. vers chacun des modules de commande équipant lesdites RISs intermédiaires 20_j) constitue en tant que tel un contrôle de ces dernières dans le présent mode de réalisation puisque, sur réception desdits déphasages, chaque élément de réflexion applique le déphasage qui lui correspond, comme déjà mentionné auparavant. Il convient toutefois de noter que le terme « contrôle » dans « étape E30 de contrôle » peut revêtir une autre signification dans d'autres modes de mise en oeuvre selon lesquels le dispositif de commande d'une RIS intermédiaire 20_j se charge lui-même de la détermination desdits déphasages (i.e. dans ce cas, le « contrôle » n'inclut plus de transmission des déphasages et s'effectue dans son entièreté au niveau de ladite RIS intermédiaire 20_j).

Il convient de noter que le procédé de contrôle a été décrit jusqu'à présent en considérant que les déphasages sont tout d'abord déterminés pour l'ensemble des RISs 20_i de l'ensemble E, puis transmis vers chacune de ces dernières. Bien entendu, rien n'exclut d'envisager que les déphasages destinés à une RIS donnée lui soient transmis dès lors qu'ils ont été déterminés (i.e. sans attendre que les déphasages des autres RISs aient également été déterminés).

Par ailleurs, si l'étape E10 est ici décrite comme étant mise en oeuvre avant l'étape E20, rien n'exclut d'envisager que cette dernière soit mise en oeuvre au cours de l'exécution de l'étape E10. En effet, l'optimisation du critère KPI peut par exemple consister à tester toutes les configurations possibles en termes de rôles attribués aux différentes RIS 20_i de l'ensemble E, et, pour une configuration donnée, évaluer le critère KPI à partir de quantités calculées lors de l'exécution de l'étape E20.

Avantageusement, et tel qu'illustré par la figure 6, les étapes E10, E20, E30 forment un ensemble d'étapes qui peut être itéré. Procéder de cette manière permet de modifier la distribution des rôles joués par les RIS_i de l'ensemble E, ce qui offre la possibilité de tenir compte de l'évolution dynamique des terminaux utilisateurs au sein des zones géographiques ZG_i respectivement associées auxdites RIS 20_i de l'ensemble E et ainsi desservir de manière efficace ces derniers.

Par exemple, ledit ensemble d'étapes est itéré suivant un pas de temps déterminé correspondant au temps de cohérence associé aux signaux émis par la station de base 21.

Selon un autre exemple, ledit ensemble d'étapes est itéré suivant un pas de temps déterminé correspondant à une fraction déterminée (« time slot » en anglais) dudit temps de cohérence.

Le problème d'optimisation à résoudre lors de l'exécution de l'étape E10 peut être exprimé de différentes manières, selon le critère KPI pris en considération, mais aussi éventuellement en fonction de la prise en compte de contraintes qui peuvent porter sur le critère KPI choisi (maximisation/minimisation d'une grandeur physique, etc.) et/ou sur d'autres aspects comme par exemple :

- une distribution de terminaux utilisateurs entre tout ou partie des zones géographiques ZG_i respectivement associées aux RIS 20_i de l'ensemble E, et/ou
- une priorité de service de tout ou partie des zones géographiques ZG_i respectivement associées aux RIS 20_i de l'ensemble E, et/ou
- une équité de service minimale entre tout ou partie des zones géographiques ZG_i respectivement associées aux RIS 20_i de l'ensemble E (par exemple, on s'assure que,

sur une période de temps déterminée, chaque zone a été desservie un nombre de fois donné).

En tout état de cause, et d'une manière générale, toute méthode d'optimisation du critère KPI peut être envisagée, le choix d'une méthode particulière ne correspondant qu'à une variante d'implémentation de l'invention.

Il va maintenant être décrit différents exemples de mise en oeuvre de l'étape E10 de détermination des rôles joués par les RISs 20_i de l'ensemble E. Plus spécifiquement, il va être décrit différentes formulations du problème d'optimisation du critère KPI pouvant être envisagées lors de l'exécution de l'étape E10 de sélection.

Selon un premier exemple, le problème d'optimisation suivant peut être résolu :

$$\max_{x_1 \cdots x_I} \sum_{i=1}^{I} \sum_{m=1}^{M_i} x_i KPI_{i,m}$$

où :

- $KPI_{i,m}$ est le critère de performance KPI rapporté à un terminal utilisateur U_m desservi par la RIS 20_i,
- $\sum_{i=1}^{I} x_i \leq 1$, avec $x_i \in \{0,1\} \, \forall i$, et I correspond au nombre de RISs 20_i appartenant au système 20 (I = 4 dans le cadre de la présente description),
- $x_i$ égal à 1 (resp. égal à 0) indique que la RIS 20_i est sélectionnée comme RIS principale (resp. d'une RIS intermédiaire),
- $M_i$ correspond au nombre de terminaux utilisateurs situés dans la zone géographique ZG_i desservie par la RIS 20_i lorsqu'elle est sélectionnée RIS principale.

On note que dans ce premier exemple, $M_i$ terminaux utilisateurs sont considérés comme desservis par la RIS 20_i au moment de la résolution du problème d'optimisation du critère KPI. Plus particulièrement, ces terminaux utilisateurs correspondent, dans ce premier exemple, à des terminaux prédéterminés que ladite RIS 20_i se destine à desservir si son rôle est déterminé comme étant celui de RIS principale. Les $M_i$ terminaux utilisateurs concernés peuvent être déterminés selon toute méthode connue de la personne du métier (estimation de canal, détermination et utilisation d'une information de type CSI, etc). De surcroit, la détermination desdits $M_i$ terminaux peut faire l'objet d'une étape de détermination intégrée au procédé de contrôle et exécutée préalablement à l'étape E10 de sélection.

En tout état de cause, le fait que les terminaux utilisateurs pris en compte lors de la résolution du problème d'optimisation du critère KPI soient prédéterminés pour chaque RIS 20_i de l'ensemble E ne constitue pas une limitation de l'invention. A cet effet, et selon un deuxième exemple, l'optimisation du critère de performance KPI peut prendre en compte, en tant que variable d'optimisation et pour au moins un terminal utilisateur situé dans la zone géographique desservie par une RIS principale, un paramètre représentatif du fait que ledit au moins un terminal utilisateur est desservi ou non. Le problème d'optimisation associé est par exemple formulé de la manière suivante :

$$\max_{x_i, y_m^i \, \forall i, m} \sum_{i=1}^{I} x_i \sum_{m=1}^{M} y_m^i KPI_{i,m}$$

où :

- $KPI_{i,m}$ est le critère de performance KPI rapporté à un terminal utilisateur U_m desservi par la RIS 20_i,

$$\sum_{i=1}^{I} x_i \leq 1, \text{ avec } x_i \in \{0,1\} \, \forall i,$$

- $x_i$ égal à 1 (resp. égal à 0) indique que la RIS 20_i est sélectionnée comme RIS principale (resp. d'une RIS intermédiaire),

$$\sum_{m=1}^{M} y_m^i \leq M_{i_{max}}, \forall i \text{ et } y_m^i \in \{0,1\} \forall i, m,$$

- $y_m^i$ égal à 1 (resp. à 0) indique qu'un terminal utilisateur U_m est desservi (resp. n'est pas desservi) par la RIS 20_i, et où $M_{imax}$ correspond à un nombre maximal donné de terminaux utilisateurs pouvant être desservis par la RIS 20_i,

- $M = \sum_{i=1}^{I} M_i$, où $M_i$ correspond au nombre de terminaux utilisateurs situés dans la zone géographique ZG_i desservie par la RIS 20_i lorsqu'elle est sélectionnée comme RIS principale.

Le problème d'optimisation tel que formulé dans ce deuxième exemple de mise en oeuvre permet de tenir davantage compte du fait que les terminaux utilisateurs peuvent avoir une dynamique qui leur est propre au sein de la cellule de communication desservie par la station de base 21. Par « dynamique » des terminaux utilisateurs, on fait référence ici au fait que ces derniers peuvent être mobiles au sein d'une zone géographique, et peuvent donc la quitter ou y entrer au cours du temps. Il s'agit donc d'un raffinement par rapport à l'exemple précédent, puisque la liste des terminaux utilisateurs desservis n'est pas figée et peut être adaptée au moment de la résolution du problème d'optimisation.

Les formulations des problèmes d'optimisation du critère KPI décrites jusqu'à présent dans les premier et deuxième exemples se basent sur le fait qu'une seule RIS parmi les RISs 20_i de l'ensemble E peut jouer le rôle de RIS principale. L'invention n'est toutefois pas limitée par ces aspects, et rien n'exclut d'envisager que l'optimisation du critère de performance KPI soit paramétrée de sorte que la sélection d'une pluralité de RISs principales soit permise parmi les RISs 20_i de l'ensemble E. A cet effet, et selon un troisième exemple, le problème d'optimisation suivant peut être résolu :

$$\max_{x_{ij}, y_m^i \forall i,j,m} \sum_{i=1}^{I} \sum_{m=1}^{M} KPI_{i,m}(x_{ij}, y_m^i)$$

où :

$$\sum_{j=1}^{I} x_{ij} \leq 1, \forall i, \text{ avec } x_{ij} \in \{0,1\} \forall i, j,$$

- $x_{ij}$ ($i \neq j$) égal à 1 indique que la RIS 20_i joue le rôle d'une RIS intermédiaire vis-à-vis de la RIS 20_j qui joue le rôle de RIS principale,
- $x_{ii}$ égal à 1 (resp. égal à 0) indique que la RIS 20_i joue le rôle d'une RIS principale (resp. d'une RIS intermédiaire),

$$x_{ij} + x_{ji} \leq 1, \forall i, j, i \neq j \text{ et } x_{ji} \leq x_{ii}, \forall i, j, i \neq j,$$

- $KPI_{i,m}$ est le critère de performance KPI rapporté à un terminal utilisateur U_m desservi par la RIS 20_i quand la répartition entre RISs principales et RISs intermédiaires encodée paramétrée par $x_{ij}$ est considérée,

$$\sum_{m=1}^{M} y_m^i \leq M_{i_{max}}, \forall i \text{ et } y_m^i \in \{0,1\} \forall i, m,$$

- $y_m^i$ égal à 1 (resp. à 0) indique qu'un terminal utilisateur U_m est desservi (resp. n'est pas desservi) par la RIS 20_i, et où $M_{imax}$ correspond à un nombre maximal donné de terminaux utilisateurs pouvant être desservis par la RIS 20_i ,

- $M = \sum_{i=1}^{I} M_i$, où $M_i$ correspond au nombre de terminaux utilisateurs situés dans la zone géographique ZG_i desservie par la RIS 20_i lorsqu'elle joue le rôle de RIS principale.

Il peut être noté que les différentes contraintes imposées sur les paramètres $x_{ij}, \forall i, j$ dans le problème d'optimisation de ce troisième exemple ont pour effet de partitionner les RISs intermédiaires selon qu'elles réfléchissent des signaux vers telle ou telle RIS principale. Dit encore autrement, la ou les RISs intermédiaires déterminées pour réfléchir des signaux vers une RIS principale sont distinctes de la ou des RISs intermédiaires déterminées pour réfléchir des signaux vers une autre RIS principale.

D'une manière générale, l'invention n'est pas limitée par le nombre de RISs pouvant être déterminées comme étant des RISs principales. Cela étant, le nombre de RISs principales est de préférence inférieur ou égal au nombre de RISs intermédiaires, de sorte à limiter le nombre de canaux de propagation entre des RISs principales et des antennes à desservir au sein des zones géographiques associées (le nombre de canaux de propagation ayant une influence sur la quantité de calculs à réaliser dans le contexte de l'invention).

Selon un quatrième exemple de mise en oeuvre, dans le cas plus spécifique où les étapes E10, E20 et E30 sont itérées suivant un pas de temps correspondant au temps de cohérence, l'optimisation du critère de performance peut prendre en compte, en tant que variable d'optimisation et pour chaque RIS 20_i de l'ensemble E, un paramètre représentatif du nombre de fractions du temps de cohérence pendant lesquelles ladite RIS 20_i joue un rôle de RIS principale. Le problème d'optimisation correspondant peut par exemple être formulé de la manière suivante :

$$\max_{x_i, y_m^i \; \forall i, m} \sum_{i=1}^{I} x_i \sum_{m=1}^{M} y_m^i KPI_{i,m}$$

où :

- $KPI_{i,m}$ est le critère de performance KPI rapporté à un terminal utilisateur U_m desservi par la RIS 20_i,

- $\sum_{i=1}^{I} x_i = S$ , avec $x_i \in [\![0, S]\!] \; \forall i$ , où S correspond au nombre de fractions discrétisant (partitionnant) le temps de cohérence étant entendu que ces fractions sont ici de tailles identiques

- $x_i$ strictement supérieur à 1 (resp. égal à 0) indique que la RIS 20_i joue le rôle d'une RIS principale au cours de $x_i$ fractions du temps de cohérence (resp. joue le rôle d'une RIS intermédiaire),

$$\sum_{m=1}^{M} y_m^i \le M_{i_{max}} , \forall i \text{ et } y_m^i \in \{0,1\} \; \forall i, m,$$

- $y_m^i$ égal à 1 (resp. à 0) indique qu'un terminal utilisateur U_m est desservi (resp. n'est pas desservi) par la RIS 20_i, et où $M_{i_{max}}$ correspond à un nombre maximal donné de terminaux utilisateurs pouvant être desservis par la RIS 20_i,

- $M = \sum_{i=1}^{I} M_i$ , où $M_i$ correspond au nombre de terminaux utilisateurs situés dans la zone géographique ZG_i desservie par la RIS 20_i lorsqu'elle joue le rôle de RIS principale.

On comprend que le problème d'optimisation de ce quatrième exemple fournit un compromis efficace en termes de rapport optimalité/charge de calculs. En effet, la fréquence à laquelle le problème d'optimisation est résolu (temps de cohérence) limite certes la prise en compte de la dynamique des terminaux utilisateurs, mais permet néanmoins de réduire la charge de calculs. En tout état de cause, ce problème d'optimisation permet également de tenir compte, via ladite contrainte $\sum_{i=1}^{I} x_i = S$ , de la proportion de temps (sur la durée totale du temps de cohérence) pendant laquelle une RIS 20_i joue le rôle de RIS principale, ce qui contribue avantageusement à l'amélioration dudit rapport optimalité/charge de calculs.

Il est à noter que les premier, deuxième, troisième et quatrième exemples détaillés ci-avant en référence à la formulation du problème d'optimisation de l'étape E10 ont été décrits indépendamment les uns des autres. Cela étant, rien n'exclut bien entendu d'envisager la formulation d'un problème d'optimisation du critère KPI en tenant compte des caractéristiques de tout ou partie desdits premier, deuxième, troisième et quatrième exemples et selon toute combinaison techniquement opérante.

Il importe également de noter que l'invention couvre des modes dans lesquels les critères KPI respectivement considérés lors de deux itérations de l'ensemble d'étapes E10, E20, E30 sont distincts.

Outre les aspects liés à la détermination des rôles des RISs 20_i de l'ensemble E, il est également possible d'envisager des exemples plus particuliers de mise en oeuvre de l'étape E20 de détermination des déphasages.

Pour la suite de la description du procédé de contrôle, on considère à titre purement illustratif que, suite à une exécution de l'étape E10, il a été déterminé un rôle de RIS intermédiaire pour chacune des RISs 20_1, 20_2 et 20_3 ainsi qu'un rôle de RIS principale pour la RIS 20_4.

Afin de décrire des exemples plus particuliers de mise en oeuvre de l'étape E20 dans le cadre de cette répartition spécifique des rôles entre les RISs de l'ensemble E, on introduit les notations qui suivent.

On utilise l'indice entier j compris entre 1 et 3 pour désigner une RIS intermédiaire 20_j.

$N_{20\_j}$ désigne le nombre d'éléments de réflexion d'une RIS 20_i. On considère également de manière nullement limitative qu'un élément de réflexion d'une RIS 20_i est de forme carrée, la longueur d'un côté de carré étant notée ci-après $L_{20\_i}$. On comprend toutefois que ces considérations ne sont pas limitatives de l'invention, et que, dans la mesure où chaque RIS 20_i est assimilable à une surface bidimensionnelle, par exemple de forme rectangulaire, rien n'exclut de distinguer les longueurs d'un élément de réflexion d'une RIS 20_i suivant deux directions x et y représentatives des directions principales dans lesquelles s'étend la RIS 20_i. On note que les axes portant les directions x et y forment donc un repère attaché à la RIS 20_i (la direction notée z étant celle orthogonale au plan formé par les directions x et y).

$\psi_{21\to20\_j}$ désigne un vecteur, dit « vecteur des angles d'incidence », correspondant à la direction d'une onde incidente provenant de la station de base 21 et dirigée vers une RIS intermédiaire 20_j. Ce vecteur comporte trois composantes $\theta_{21\text{-}20\_j}, \phi_{21\to20\_j}, \omega_{21\to20\_j}$ correspondant respectivement à l'élévation, l'azimut et la polarisation associés à ladite direction.

$\psi_{20\_j\to20\_4}$ désigne un vecteur, dit « vecteur des angles d'arrivée », correspondant à la direction d'une onde réfléchie par une RIS intermédiaire 20_j vers la RIS principale 20_4. Ce vecteur comporte deux composantes $\theta_{20\_j\to20\_4}, \phi_{20\_j\to20\_4}$ correspondant respectivement à l'élévation et l'azimut associés à ladite direction.

$A_{21\to20\_j}$ désigne une matrice représentative des directions d'ondes transmises par la station de base 21 vers les $N_{20\_j}$ éléments de réflexion d'une RIS intermédiaire 20_j. Chaque colonne de la matrice $A_{21\to20\_j}$ correspond à un vecteur d'orientation (« steering vector » en anglais) d'un chemin de transmission existant entre la station de base 21 et la RIS intermédiaire 20_j.

$D_{20\_j\to20\_4}$ désigne une matrice représentative des directions des ondes réfléchies par les $N_{20\_j}$ éléments de réflexion d'une RIS intermédiaire 20_j vers les $N_{20\_4}$ éléments de réflexion de la RIS principale 20_4. Chaque colonne de la matrice $D_{20\_j\to20\_4}$ correspond à un vecteur d'orientation d'un chemin de transmission existant entre la RIS intermédiaire 20_j et la RIS principale 20_4.

$$B_x\left(\psi_{21\to20\_j}\right) = \sin\theta_{21\to20\_j}\cos\phi_{21\to20\_j}$$

$$B_y\left(\psi_{21\to20\_j}\right) = \sin\theta_{21\to20\_j}\sin\phi_{21\to20\_j}$$

$$B_z\left(\psi_{21\to20\_j}\right) = \cos\theta_{21\to20\_j}$$

$$B_x\left(\psi_{20\_j\to20\_4}\right) = \sin\theta_{20\_j\to20\_4}\cos\phi_{20\_j\to20\_4}$$

$$B_y\left(\psi_{20\_j\to20\_4}\right) = \sin\theta_{20\_j\to20\_4}\sin\phi_{20\_j\to20\_4}$$

$$B_z\left(\psi_{20\_j\to20\_4}\right) = \cos\theta_{20\_j\to20\_4}$$

$$B_p = B_p\left(\psi_{21\to20\_j}\right) + B_p\left(\psi_{20\_j\to20\_4}\right), \forall p \in \{x, y, z\}$$

$$B_{x,z} = \cos\omega_{21\to20\_j}B_x\left(\psi_{21\to20\_j}\right) + \sin\omega_{21\to20\_j}B_z\left(\psi_{21\to20\_j}\right)$$

$Q_{20\_j}$ désigne une matrice diagonale représentative des déphasages appliqués à chacun des $N_{20\_j}$ éléments de réflexion d'une RIS intermédiaire 20_j, et peut être exprimée sous la forme suivante :

$$Q_{20\_j} = diag\left(\overline{g_{20\_j}}e^{i\varphi_{20\_j,1}}, \cdots, \overline{g_{20\_j}}e^{i\varphi_{20\_j,N_{20\_j}}}\right)$$

expression dans laquelle :

- i est le nombre complexe qui élevé au carré est égal à -1,
- $\varphi_{20\_j,k}$ correspond au déphasage introduit par l'élément de réflexion d'indice k de la RIS intermédiaire 20_j (k=1,...,$N_{20\_j}$),

$$\overline{g_{20\_j}} = \frac{\sqrt{4\pi}}{\lambda} g_{20\_j}$$
- , où $\lambda$ correspond à la longueur d'onde,

$$g_{20\_j} = \frac{i\sqrt{4\pi} \times \tau \times L_{20\_j}^2}{\lambda} \widetilde{g_{20\_j}} sinc\left(\frac{\pi L_{20\_j}B_x}{\lambda}\right) sinc\left(\frac{\pi L_{20\_j}B_z}{\lambda}\right)$$
- , où sinc correspond à la fonction sinus cardinal, et $\tau$ correspond à un coefficient de réflexion de chaque élément de réflexion de la RIS intermédiaire 20_j (ce coefficient $\tau$ est compris entre 0 et 1, et est supposé constant pour tous les éléments de réflexion dans le présent mode de mise en œuvre). Comme cela ressort de cette formule, le paramètre $g_{20\_j}$ s'exprime notamment en fonction de caractéristiques géométriques des éléments de réflexion de la RIS intermédiaire 20_j, plus particulièrement dans cet exemple en fonction de la caractéristique dimensionnelle $L_{20\_j}$,

- $\widetilde{g_{20\_j}}$ est égal à la quantité suivante :

$$\frac{B_y}{\sqrt{B_{x,z}^2 + B_y^2}} \left\| \begin{array}{c} \cos\theta_{20\_j\rightarrow20\_4}\left(\cos\omega_{21\rightarrow20\_j}\sin\phi_{20\_j\rightarrow20\_4} - \sin\omega_{21\rightarrow20\_j}\cos\phi_{20\_j\rightarrow20\_4}\right) \\ \sin\omega_{21\rightarrow20\_j}\sin\theta_{21\rightarrow20\_j} + \cos\omega_{21\rightarrow20\_j}\cos\phi_{21\rightarrow20\_j} \end{array} \right\|_2$$

où $\|.\|_2$ désigne la norme euclidienne.

Pour la suite de la description, on considère également de manière nullement limitative que le dispositif de contrôle 22 a la connaissance des vecteurs $\psi_{21\rightarrow20\_j}$, $\psi_{20\_j\rightarrow20\_4}$, ainsi que des matrices $A_{21\rightarrow20\_j}$, $D_{20\_j\rightarrow20\_4}$ pour chacune des RIS intermédiaires 20_j. Ces différentes données sont par exemple stockées dans la mémoire non volatile 22_4 du dispositif de contrôle 22.

Ces considérations ne sont toutefois pas limitatives de l'invention qui peut encore couvrir d'autres modes de mise en oeuvre dans lesquels tout ou partie desdites données est obtenu par le dispositif de contrôle 22 en provenance d'une autre entité (auquel cas le procédé de contrôle comporte une étape de réception correspondante), et/ou tout ou partie desdites données est déterminé par le dispositif de contrôle 22 (auquel cas le procédé de contrôle comporte une étape de détermination correspondante).

Selon un exemple plus particulier de mise en oeuvre, les déphasages sont déterminés lors de l'étape E20 de sorte que, pour chaque RIS intermédiaire 20_j, la puissance des signaux réfléchis par ladite RIS intermédiaire 20_j vers la RIS principale 20_4 est supérieure à un seuil donné ou maximisée.

Pour ce faire, la puissance des signaux réfléchis par ladite RIS intermédiaire 20_j vers la RIS principale 20_4 est considérée comme étant une fonction paramétrée par :

- lesdits déphasages (ces derniers jouant donc le rôle de variables d'optimisation dans le cadre de ladite étape E20),
- les angles d'incidence des signaux émis par la station de base 21 vers ladite RIS intermédiaire 20_j,
- les angles de départ des signaux réfléchis par ladite RIS intermédiaire 203_j vers la RIS principale 20_4.

Le fait de déterminer les déphasages de la RIS intermédiaires 20_j de cette manière permet de tenir compte de la réalité physique précise dans laquelle se trouve ladite RIS intermédiaire 20_j. Cette réalité physique fait référence ici aux angles d'incidence et de départ avec lesquels des signaux arrivent sur/sont réfléchis par la RIS intermédiaire 20_j. Procéder de la sorte permet de configurer la RIS intermédiaire 20_j de manière avantageuse pour que la réflexion de signaux vers la RIS principale 20_4 soit effectuée de manière beaucoup plus dirigée et concentrée que dans l'art antérieur.

En considérant les notations précédemment introduites, la réponse (i.e. le comportement en termes de modulation de phase et d'amplitude) de la RIS intermédiaire 20_j vis-à-vis des signaux incidents provenant de la station de base 21 et réfléchis vers la RIS principale 20_4 peut par exemple être modélisée sous la forme d'une matrice $G_{20\_j\rightarrow20\_4}$ dont le terme située à la ligne l1 et à la colonne l2 peut être exprimé sous la forme suivante :

$$[G_{20\_j \to 20\_4}]_{l_1, l_2}$$

$$= d^H_{20\_j \to 20\_4}\left(\psi^{l_1}_{20\_j \to 20\_4}\right) \times Q_{20\_j}\left(\psi^{l_2}_{21 \to 20\_j}, \psi^{l_1}_{20\_j \to 20\_4}\right)$$

$$\times a_{21 \to 20\_j}\left(\psi^{l_2}_{21 \to 20\_j}\right)$$

expression dans laquelle :

- H désigne l'opérateur de transposition conjugaison,

- $\psi^{l_2}_{21 \to 20\_j}$ est la l2-ème colonne du vecteur $\psi_{21 \to 20\_j}$,

- $\psi^{l_1}_{20\_j \to 20\_4}$ est la l1-ème colonne du vecteur $\psi_{20\_j \to 20\_4}$,

- $d^H_{20\_j \to 20\_4}\left(\psi^{l_1}_{20\_j \to 20\_4}\right)$ est la l1-ème colonne de la matrice $D_{20\_j \to 20\_4}$,

- $a_{21 \to 20\_j}\left(\psi^{l_2}_{21 \to 20\_j}\right)$ est la l2-ème colonne de la matrice $A_{21 \to 20\_j}$

En définitive, la puissance des signaux réfléchis par ladite RIS intermédiaire 20_j vers la RIS principale 20_4 est fonction du module au carré desdits termes $[G_{20\_j \to 20\_4}]_{l_1, l_2}$. En conséquence, la détermination des déphasages respectifs des éléments de réflexion de ladite RIS intermédiaire 20_j peut s'effectuer en résolvant un problème d'optimisation.

Par exemple, dans le cas où on cherche à ce que les déphasages soient déterminés de sorte que la puissance des signaux réfléchis par ladite RIS intermédiaire 20_j vers la RIS principale 20_4 est maximisée, ledit problème d'optimisation à résoudre, ci-après noté « PB1 », est le suivant :

$$\max_{\gamma, \varphi_{20\_j,1} \cdots \varphi_{20\_j, N_{20\_j}}} \gamma$$

où

$$|[G_{20\_j \to 20\_4}]_{l_1, l_2}|^2 > \gamma, \forall l_1, l_2 \text{ et } \varphi_{20\_j,k} \in [0, 2\pi], \forall k.$$

On note que le paramètre y correspond ici à un paramètre intermédiaire représentatif de la borne inférieure de la quantité $|[G_{20\text{-}j \to 20\_4}]_{l_1, l_2}|^2, \forall l_1, l_2$. Le problème d'optimisation PB1 vise donc ici plus spécifiquement à maximiser cette borne inférieure.

Toute méthode d'optimisation connue de la personne du métier pour résoudre un tel problème PB1 peut être envisagée, le choix d'une méthode particulière ne correspondant qu'à une variante d'implémentation de l'invention.

Selon un autre exemple, dans le cas où on cherche à ce que les déphasages soient déterminés de sorte que la puissance des signaux réfléchis par ladite RIS intermédiaire 20_j vers la RIS principale 20_4 est supérieure à un seuil $\gamma$ donné, ledit problème d'optimisation à résoudre, ci-après noté « PB1_BIS », consiste à trouver les déphasages $\varphi_{20\_j,1} \cdots \varphi_{20\_j, N_{20\_j}}$ de sorte que $|[G_{20\_j \to 20\_4}]_{l_1, l_2}|^2 > \gamma, \forall l_1, l_2$ et $\varphi_{20\_j,k} \in [0, 2\pi], \forall k$.

Par ailleurs, on comprend que si chaque RIS intermédiaire 20_j est configurée pour réfléchir des signaux provenant de la station de base 21 vers la RIS principale 20_4, il peut exister un risque que certaines de ces réflexions soient non contrôlées de sorte à être finalement dirigées ailleurs, comme par exemple vers une autre RIS intermédiaire 20_j' ou bien directement vers un terminal utilisateur. A cet effet, et de manière avantageuse, il est possible d'envisager d'autres exemples plus particuliers de l'étape E20 dans lesquels les interférences vis-à-vis des autres RIS intermédiaires et/ou vis-à-vis des terminaux utilisateurs sont réduites.

Par exemple, les déphasages associés à une RIS intermédiaire 20_j peuvent également être déterminés (i.e. en complément de la recherche d'une maximisation de la puissance des signaux réfléchis par ladite RIS intermédiaire 20_j vers la RIS principale 20_4) de sorte que la puissance de signaux réfléchis par ladite RIS intermédiaire 20_j vers au moins une autre RIS intermédiaire 20_j' est minimisée (la contribution de la RIS intermédiaire 20_j vers ladite au moins une autre RIS intermédiaire 20_j' est symbolisée par le paramètre $\beta_1$ dans ce qui suit). En reprenant les notations introduites précédemment, le problème d'optimisation correspondant, ci-après noté « PB2 », peut alors être formulé de la façon suivante :

$$\max_{\gamma,\beta_1,\varphi_{20\_j,1}\cdots\varphi_{20\_j,N_{20\_j}}} \gamma - \beta_1$$

où :

$$|[G_{20\_j\to 20\_4}]_{l_1,l_2}|^2 > \gamma, \forall l_1,l_2$$

$$\varphi_{20\_j,k} \in [0,2\pi], \forall k,$$

$$|[G_{20\_j\to 20\_j'}]_{l_3,l_2}|^2 < \beta_1, \forall l_2,l_3$$

Dans ce problème d'optimisation PB2, la matrice $G_{20\_j\to 20\_j'}$ modélise la réponse (i.e. le comportement en termes de modulation de phase et d'amplitude) de la RIS intermédiaire 20_j vis-à-vis des signaux incidents provenant de la station de base 21 et réfléchis vers une autre RIS intermédiaire 20_j'. La détermination des termes de cette matrice $G_{20\_j\to 20\_j'}$ peut s'effectuer suivant des formules similaires à celles données ci-avant pour la matrice 0_4. On comprend bien entendu que la contrainte de puissance portant sur la matrice $G_{20\_j\to 20\_j'}$, dans le problème d'optimisation PB2 ci-dessus, peut être reproduite pour tout indice j' différent de l'indice j.

Selon un autre exemple, dans le cas où on cherche à ce que les déphasages soient déterminés de sorte que la puissance de signaux réfléchis par la RIS intermédiaire 20_j vers au moins une autre RIS intermédiaire 20_j' est inférieure à un seuil $\beta_1$ donné, ledit problème d'optimisation à résoudre, ci-après noté « PB2_BIS », consiste à trouver les déphasages $\varphi_{20\_j,1}\cdots\varphi_{20\_j,N20\_j}$ de sorte que $|[G_{20\_j\to 20\_4}]_{l_1,l_2}|^2 > \gamma$, $\forall l_1,l_2$, $\varphi_{20\_j,k} \in [0,2\pi]$, $\forall k$ et $|[G_{20\_j\to 20\_j'}]_{l_3,l_2}|^2 <\beta_1, \forall l_2,l_3$.

Alternativement, les déphasages associés à une RIS intermédiaire 20_j peuvent également être déterminés de sorte que la puissance de signaux réfléchis par ladite RIS intermédiaire 20_j directement vers au moins un terminal utilisateur situé dans la zone géographique ZG_4 est minimisée (la contribution de la RIS intermédiaire 20_j vers un terminal utilisateur situé dans la la zone géographique ZG_4 est symbolisée par le paramètre $\beta_2$ dans ce qui suit). En reprenant les notations introduites précédemment, et en notant également U_m un m-ième utilisateur de la zone géographique ZG_4, le problème d'optimisation correspondant, ci-après noté « PB3 », peut être formulé de la façon suivante :

$$\max_{\gamma,\beta_2,\varphi_{20\_j,1}\cdots\varphi_{20\_j,N_{20\_j}}} \gamma - \beta_2$$

où :

$$|[G_{20\_j\to 20\_4}]_{l_1,l_2}|^2 > \gamma, \forall l_1,l_2$$

$$\varphi_{20\_j,k} \in [0,2\pi], \forall k,$$

$$|[G_{20\_j\to U\_m}]_{l_4,l_2}|^2 < \beta_2, \forall l_2,l_4.$$

Dans ce problème d'optimisation PB3, la matrice $G_{20\_j\to U\_m}$ modélise la réponse (i.e. le comportement en termes de modulation de phase et d'amplitude) de la RIS intermédiaire 20_j vis-à-vis des signaux incidents provenant de la station de base 21 et directement réfléchis vers un utilisateur U_m. La détermination des termes de cette matrice $G_{20\_j\to U\_m}$ peut s'effectuer suivant des formules similaires à celles données ci-avant pour la matrice $G_{20\_j\to 20\_4}$. On comprend bien entendu que la contrainte de puissance portant sur la matrice $G_{20\_j\to U\_m}$ dans le problème d'optimisation PB3 ci-dessus peut être reproduite pour tout indice m relatifs aux utilisateurs présents dans la zone géographique ZG_4.

Selon encore un autre exemple, dans le cas où on cherche à ce que les déphasages soient déterminés de sorte que la puissance de signaux réfléchis par ladite RIS intermédiaire 20_j directement vers au moins un terminal utilisateur situé dans la zone géographique ZG_4 est inférieure à un seuil $\beta_2$ donné, ledit problème d'optimisation à résoudre, ci-après noté « PB3_BIS », consiste à trouver les déphasages $\varphi_{20\_j,1} \cdots \varphi_{20\_j,N20\_j}$ de sorte que $|[G_{20\_j\rightarrow20\_4}]_{l_1,l_2}|^2 > \gamma, \forall l_1, l_2,$ $\varphi_{20\_j,k} \in [0,2\pi], \forall k$ et $|[G_{20\_j\rightarrow U\_m}]_{l_4,l_2}|^2 < \beta_2, \forall l_2, l_4$.

Il importe aussi de noter que, selon encore d'autres exemples de mises en oeuvre, les déphasages des éléments de réflexion d'une RIS intermédiaire 20_j peuvent être déterminés en combinant tous les problèmes d'optimisation précédemment décrits. Dit encore autrement, toutes les contraintes précédemment citées (puissance réfléchie vers la RIS principale 20_4 supérieure à un seuil ou maximisée, puissance réfléchie vers un utilisateur U_m inférieure à un seuil ou minimisée, puissance réfléchie vers une autre RIS intermédiaire 23_j' inférieure à un seuil ou minimisée) peuvent être prises en compte selon toute combinaison techniquement opérante.

Les différents aspects de l'invention (contrôle des éléments de réflexion des RISs intermédiaires 20_j, sélection des rôles des RISs 20_i de l'ensemble E) ont été décrits jusqu'à présent en considérant un lien de communication descendant entre la station de base 21 et les terminaux utilisateurs répartis dans les différentes zones géographiques ZG_i. Toutefois, ces dispositions ne sont pas limitatives de l'invention, et les différents aspects de l'invention peuvent également être mis en oeuvre dans le contexte d'un lien de communication montant entre les terminaux utilisateurs et la station de base 21.

Dans ce contexte d'un lien de communication montant entre les terminaux utilisateurs et la station de base 21, on comprend alors qu'une RIS principale ne représente plus une surface de « focalisation » vis-à-vis des RISs intermédiaires auxquelles elle est associée, mais plutôt une surface de « transmission » (ou de « diffusion »), en ce sens que lesdites RISs intermédiaires se destinent à recevoir à des signaux en provenance d'une telle RIS principale de transmission pour les réfléchir vers la station de base 21.

On décrit ci-dessous la mise à jour des formulations des problèmes d'optimisation PB1, PB2 et PB3 pour le contexte d'un lien de communication montant entre les terminaux utilisateurs et la station de base 21. Il est à noter que chacun de ces problèmes d'optimisation PB1, PB2 et PB3 admet, dans ce contexte d'un lien de communication montant, deux formulations selon que l'on considère une technique de transmission de signaux par multiplexage TDD (« Time Division Duplex » en anglais) ou FDD (« Fréquence Division Duplex » en anglais).

Ainsi, pour ce qui est du problème d'optimisation PB1, il se formule de la manière suivante dans le cas d'une transmission TDD montante (i.e. on considère une même fréquence de transmission, et donc a fortiori une même longueur d'onde $\lambda$) :

$$\max_{\gamma,\varphi_{20\_j,1}\cdots\varphi_{20\_j,N_{20\_j}}} \gamma$$

où

$$|[G_{20\_j\rightarrow21}]_{l_2,l_1}|^2 > \gamma, \forall l_1, l_2 \text{ et } \varphi_{20\_j,k} \in [0,2\pi], \forall k.$$

Pour ce qui est du problème d'optimisation PB1, il se formule de la manière suivante dans le cas d'une transmission FDD montante (i.e. on considère ici deux fréquences de transmission distinctes, et donc a fortiori deux longueurs d'onde $\lambda1, \lambda2$ distinctes) :

$$\max_{\gamma,\varphi_{20\_j,1}\cdots\varphi_{20\_j,N_{20\_j}}} \gamma$$

où

$$|[G_{20\_j\rightarrow21}]_{l_2,l_1,\lambda1}|^2 > \gamma, \forall l_1, l_2 \text{ et } \varphi_{20\_j,k} \in [0,2\pi], \forall k,$$

$$|[G_{20\_j\rightarrow20\_4}]_{l_1,l_2,\lambda2}|^2 > \gamma, \forall l_1, l_2 \text{ et } \varphi_{20\_j,k} \in [0,2\pi], \forall k.$$

Pour ce qui est du problème d'optimisation PB2, il se formule de la manière suivante dans le cas d'une transmission TDD montante (i.e. on considère une même fréquence de transmission, et donc a fortiori une même longueur d'onde $\lambda$) :

$$\max_{\gamma,\beta_1,\varphi_{20\_j,1}\cdots\varphi_{20\_j,N_{20\_j}}} \gamma - \beta_1$$

où

$$|[G_{20\_j\to21}]_{l_2,l_1}|^2 > \gamma, \forall l_1, l_2 \text{ et } \varphi_{20\_j,k} \in [0,2\pi], \forall k$$

$$|[G_{20\_j'\to20\_j}]_{l_2,l_3}|^2 < \beta_1, \forall l_2, l_3.$$

Pour ce qui est du problème d'optimisation PB2, il se formule de la manière suivante dans le cas d'une transmission FDD montante (i.e. on considère ici deux fréquences de transmission distinctes, et donc a fortiori deux longueurs d'onde λ1, λ2 distinctes) :

$$\max_{\gamma,\beta_1,\varphi_{20_j,1}\cdots\varphi_{20_j,N_{20_j}}} \gamma - \beta_1$$

où

$$|[G_{20\_j\to20\_4}]_{l_1,l_2,\lambda1}|^2 > \gamma, \forall l_1, l_2 \text{ et } \varphi_{20_j,k} \in [0,2\pi], \forall k$$

$$|[G_{20\_j\to20\_j'}]_{l_3,l_2,\lambda1}|^2 < \beta_1, \forall l_2, l_3$$

$$|[G_{20\_j\to21}]_{l_2,l_1,\lambda2}|^2 > \gamma, \forall l_1, l_2$$

$$|[G_{20\_j\to20\_j'}]_{l_2,l_3,\lambda2}|^2 < \beta_1, \forall l_2, l_3$$

Pour ce qui est du problème d'optimisation PB3, il se formule de la manière suivante dans le cas d'une transmission TDD montante (i.e. on considère une même fréquence de transmission, et donc a fortiori une même longueur d'onde λ) :

$$\max_{\gamma,\beta_2,\varphi_{20_j,1}\cdots\varphi_{20_j,N_{20_j}}} \gamma - \beta_2$$

où

$$|[G_{20_j\to21}]_{l_2,l_1}|^2 > \gamma, \forall l_1, l_2 \text{ et } \varphi_{20_j,k} \in [0,2\pi], \forall k$$

$|[G_{20\_j\to21}]_{l_2,l_4}|^2 < \beta_2$. $\forall l_2, l_4$. On note que cette dernière contrainte porte sur la réponse (i.e. le comportement en termes de modulation de phase et d'amplitude) de la RIS intermédiaire 20_j lorsqu'on considère :

- des signaux incidents en provenance directe de terminaux utilisateurs destinés à être servis par ladite RIS intermédiaire 20_j si elle est sélectionnée en tant que RIS principale,
- des signaux de départ vers la station de base 21 depuis la RIS intermédiaire 20_j.

Pour ce qui est du problème d'optimisation PB3, il se formule de la manière suivante dans le cas d'une transmission FDD montante (i.e. on considère ici deux fréquences de transmission distinctes, et donc a fortiori deux longueurs d'onde λ1, λ2 distinctes) :

$$\max_{\gamma, \beta_2, \varphi_{20_j,1} \cdots \varphi_{20_j,N_{20_j}}} \gamma - \beta_2$$

où

$$|[G_{20\_j \to 20\_4}]_{l_1, l_2, \lambda 1}|^2 > \gamma, \forall l_1, l_2 \text{ et } \varphi_{20_j,k} \in [0, 2\pi], \forall k$$

$$|[G_{20\_j \to U\_m}]_{l_4, l_2, \lambda 1}|^2 < \beta_2, \forall l_2, l_4$$

$$|[G_{20\_j \to 21}]_{l_2, l_1, \lambda 2}|^2 > \gamma, \forall l_1, l_2$$

$|[G_{20\_j \to 21}]_{l_2, l_4, \lambda 2}|^2 < \beta_2, \forall l_2, l_4$. On note que cette dernière contrainte porte sur la réponse (i.e. le comportement en termes de modulation de phase et d'amplitude) de la RIS intermédiaire 20_j lorsqu'on considère :

- des signaux incidents en provenance directe de terminaux utilisateurs destinés à être servis par ladite RIS intermédiaire 20_j si elle est sélectionnée en tant que RIS principale,
- des signaux de départ vers la station de base 21 depuis la RIS intermédiaire 20_j.

Les problèmes d'optimisation PB1_BIS, PB2_BIS et PB3_BIS peuvent bien entendu être reformulés, dans ce contexte d'un lien de communication montant, suivant des considérations similaires à celles qui viennent être décrites pour les problèmes d'optimisation PB1, PB2, PB3.


**Revendications**

1. Procédé de contrôle d'un ensemble E de surfaces intelligentes reconfigurables (20_1, 20_2, 20_3, 20_4) associées à un point d'accès (21), ledit procédé comportant des étapes de :

   - sélection (E10), parmi l'ensemble E, d'au moins une surface comme « surface intermédiaire » et d'au moins une surface comme « surface principale », chaque surface de l'ensemble E étant associée à une zone géographique donnée (ZG_1, ZG_2, ZG_3, ZG_4) couverte par le point d'accès et qu'elle se destine à desservir si elle est sélectionnée comme surface principale, chaque surface intermédiaire étant positionnée entre le point d'accès et une surface principale ainsi que destinée à réfléchir vers ladite surface principale des signaux émis par le point d'accès pour échanger des données avec au moins un terminal utilisateur situé dans la zone géographique desservie par ladite surface principale, la sélection étant effectuée de sorte à optimiser un critère déterminé de performance de communication pour au moins un terminal utilisateur dans la zone géographique desservie par chaque surface principale,
   - détermination (E20) de déphasages d'éléments de réflexion desdites au moins une surface intermédiaire et au moins une surface principale sélectionnées,
   - contrôle (E30) des éléments de réflexion desdites au moins une surface intermédiaire et au moins une surface principale sélectionnées au moyen des déphasages déterminés.

2. Procédé de contrôle d'un ensemble E de surfaces intelligentes reconfigurables associées à un point d'accès, ledit procédé comportant des étapes de :

   - sélection, parmi l'ensemble E, d'au moins une surface comme « surface intermédiaire » et d'au moins une surface comme « surface principale », chaque surface de l'ensemble E étant associée à une zone géographique donnée couverte par le point d'accès et depuis laquelle elle se destine à recevoir des signaux émis par au moins un terminal utilisateur pour échanger des données avec le point d'accès si elle est sélectionnée comme surface principale, chaque surface intermédiaire étant positionnée entre le point d'accès et une surface principale depuis laquelle la surface intermédiaire se destine à recevoir des signaux pour les réfléchir vers le point d'accès, la sélection étant effectuée de sorte à optimiser un critère déterminé de performance de communication pour au moins un terminal utilisateur situé dans la zone géographique desservie par chaque surface principale,
   - détermination de déphasages d'éléments de réflexion desdites au moins une surface intermédiaire et au moins une surface principale sélectionnées,
- contrôle des éléments de réflexion desdites au moins une surface intermédiaire et au moins une surface principale sélectionnées au moyen des déphasages déterminés.

3. Procédé selon l'une quelconque des revendications 1 à 2, dans lequel les étapes de sélection (E20), de détermination des déphasages (E20) et de contrôle (E30) forment un ensemble d'étapes, ledit ensemble d'étapes étant itéré.

4. Procédé selon la revendication 3, dans lequel ledit ensemble d'étapes est itéré suivant un pas de temps déterminé correspondant au temps de cohérence associé aux signaux émis par le point d'accès ou par ledit au moins un terminal utilisateur, ou à une fraction déterminée dudit temps de cohérence.

5. Procédé selon l'une quelconque des revendications 1 à 4, dans lequel le critère de performance de communication est représentatif d'au moins un élément parmi :

- un débit des données pouvant être échangées entre le point d'accès et au moins un terminal utilisateur situé dans la zone géographique desservie par chaque surface principale,
- un niveau de qualité de service des échanges de données entre le point d'accès et au moins un terminal utilisateur situé dans la zone géographique desservie par chaque surface principale,
- une énergie requise pour réaliser des échanges de données entre le point d'accès et au moins un terminal utilisateur situé dans la zone géographique desservie par chaque surface principale,
- un rapport signal sur bruit des échanges de données entre le point d'accès et au moins un terminal utilisateur situé dans la zone géographique desservie par chaque surface principale.

6. Procédé selon la revendication 1 ou selon l'une quelconque des revendications 3 à 5 au moins combinée avec la revendication 1, dans lequel l'optimisation du critère de performance prend en compte, en tant que variable d'optimisation et pour au moins un terminal utilisateur situé dans la zone géographique desservie par une surface principale, un paramètre représentatif du fait que ledit au moins un terminal utilisateur est desservi ou non.

7. Procédé selon la revendication 1 ou selon l'une quelconque des revendications 3 à 5 au moins combinée avec la revendication 1, ledit procédé comportant, préalablement à l'étape de sélection, une étape de détermination, pour chaque surface de l'ensemble E, des terminaux utilisateurs à desservir par ladite surface si celle-ci est sélectionnée comme surface principale.

8. Procédé selon l'une quelconque des revendications 1 à 7 et selon la revendication 4, ledit pas de temps correspondant au temps de cohérence, ledit temps de cohérence étant échantillonné en une pluralité de fractions déterminées, l'optimisation du critère de performance prenant en compte, en tant que variable d'optimisation et pour chaque surface de l'ensemble E, un paramètre représentatif du nombre de fractions du temps de cohérence pendant lesquelles ladite surface est sélectionnée comme surface principale.

9. Procédé selon la revendication 1 ou selon l'une quelconque des revendications 3 à 8 au moins combinée avec la revendication 1, dans lequel l'optimisation du critère de performance est paramétrée de sorte que :

- la sélection d'une pluralité de surfaces principales est permise, et
- la ou les surfaces intermédiaires sélectionnées pour réfléchir des signaux vers une surface principale sont distinctes de la ou des surfaces intermédiaires sélectionnées pour réfléchir des signaux vers une autre surface principale.

10. Procédé selon la revendication 1 ou selon l'une quelconque des revendications 3 à 9 au moins combinée avec la revendication 1, dans lequel l'étape de détermination des déphasages (E20) est mise en oeuvre de sorte que la puissance des signaux réfléchis par une surface intermédiaire vers une surface principale est supérieure à un seuil donné ou maximisée, ladite puissance étant une fonction paramétrée par lesdits déphasages, des angles des signaux émis par le point d'accès vers ladite surface intermédiaire ainsi que des angles de départ des signaux réfléchis par ladite surface intermédiaire vers ladite surface principale.

11. Procédé selon la revendication 2 ou selon l'une quelconque des revendications 3, 4, 5, 8 au moins combinée avec la revendication 2, dans lequel l'étape de détermination des déphasages est mise en oeuvre de sorte que la puissance des signaux réfléchis par une surface intermédiaire vers le point d'accès est supérieure à un seuil donné ou maximisée, ladite puissance étant une fonction paramétrée par lesdits déphasages, des angles des signaux réfléchis par ladite au moins une surface principale vers ladite surface intermédiaire ainsi que des angles des signaux réfléchis par ladite surface intermédiaire vers le point d'accès.

12. Procédé selon la revendication 10, dans lequel les déphasages sont également déterminés de sorte que la puissance de signaux réfléchis par une surface intermédiaire directement vers au moins un terminal utilisateur situé dans la zone géographique desservie par la surface principale vers laquelle des signaux sont réfléchis par ladite surface intermédiaire est inférieure à un seuil donné ou minimisée.

13. Procédé selon l'une quelconque des revendications 10 à 12, dans lequel les déphasages sont également déterminés de sorte que la puissance de signaux réfléchis par une surface intermédiaire vers au moins une autre surface intermédiaire est inférieure à un seuil donné ou minimisée.

14. Programme d'ordinateur comportant des instructions pour la mise en oeuvre d'un procédé de contrôle selon l'une quelconque des revendications 1 à 13 lorsque ledit programme est exécuté par un ordinateur.

15. Support d'enregistrement lisible par un ordinateur sur lequel est enregistré un programme d'ordinateur selon la revendication 14.

16. Dispositif de contrôle (22) comportant des moyens configurés pour mettre en oeuvre un procédé de contrôle selon l'une quelconque des revendications 1 à 13.

17. Système de communication sans fil (20) comportant un point d'accès (21), un ensemble E de surfaces intelligentes reconfigurables (20_1, 20_2, 20_3, 20_4) associées au point d'accès, ainsi qu'un dispositif de contrôle (22) selon la revendication 16.

[Fig. 1]

[Fig. 2]

[Fig. 3]

[Fig. 4]

[Fig. 5]

[Fig. 6]

**RAPPORT DE RECHERCHE EUROPEENNE**

Numéro de la demande

EP 25 15 4556

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MA XIAOYAN ET AL: "Multi-Hop Multi-RIS Wireless Communication Systems: Multi-Reflection Path Scheduling and Beamforming", IEEE TRANSACTIONS ON WIRELESS COMMUNICATIONS, IEEE SERVICE CENTER, PISCATAWAY, NJ, US, vol. 23, no. 7, 1 décembre 2023 (2023-12-01), pages 6778-6792, XP011975702, ISSN: 1536-1276, DOI: 10.1109/TWC.2023.3333050 [extrait le 2023-12-01] | 1-6,8-17 | INV. H04B7/04 H01Q15/14 H04B7/145 |
| A | * Sections II, III et III * * figure 1 * | 7 | |
| X | WO 2022/186815 A1 (GOOGLE LLC [US]) 9 septembre 2022 (2022-09-09) | 1-7, 9-11, 13-17 | |
| A | * alinéa [0050] - alinéa [0071] * * alinéa [0098] - alinéa [0105] * * figures 5, 8 * | 8,12 | DOMAINES TECHNIQUES RECHERCHES (IPC) |
| A | YUANWEI LIU ET AL: "Reconfigurable Intelligent Surfaces: Principles and Opportunities", ARXIV.ORG, CORNELL UNIVERSITY LIBRARY, 201 OLIN LIBRARY CORNELL UNIVERSITY ITHACA, NY 14853, 30 novembre 2020 (2020-11-30), XP081825372, * Dernier paragraphe de la Section IV.; page 41 * | 4 | H04B H01Q |

Le présent rapport a été établi pour toutes les revendications

| Lieu de la recherche | Date d'achèvement de la recherche | Examinateur |
|---|---|---|
| Munich | 28 mai 2025 | Toumpakaris, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 15 4556

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-05-2025

| Document brevet cité au rapport de recherche | Date de publication | Membre(s) de la famille de brevet(s) | Date de publication |
|---|---|---|---|
| WO 2022186815 A1 | 09-09-2022 | CN 116918267 A | 20-10-2023 |
| | | EP 4073953 A1 | 19-10-2022 |
| | | US 2024154646 A1 | 09-05-2024 |
| | | WO 2022186815 A1 | 09-09-2022 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. D. RENZO** ; **A. ZAPPONE** ; **M. DEBBAH** ; **M. ALOUINI** ; **C. YUEN** ; **J. D. ROSNY** ; **S. TRETYAKOV**. Smart Radio Environments Empowered by Reconfigurable Intelligent Surfaces: How it Works, State of Research, and Road Ahead. *IEEE Journal on Selected 5 Areas in Communications*, 2020, 2450-2524